# EUROPÄISCHE PATENTSCHRIFT

(11) **EP 3 595 137 B1**
(45) Veröffentlichungstag und Bekanntmachung des Hinweises auf die Patenterteilung: **01.04.2026**
(21) Anmeldenummer: 19178695.3
(22) Anmeldetag: 06.06.2019
(51) Int. Cl.: H02K 7/09, H02K 7/14, H02K 1/28, F16C 32/04, B01F 33/453, H02K 1/2791

(54) **ELEKTROMAGNETISCHER DREHANTRIEB UND ROTATIONSVORRICHTUNG**
ELECTROMAGNETIC ROTARY DRIVE AND ROTARY DEVICE
ENTRAÎNEMENT ROTATIF ÉLECTROMAGNÉTIQUE ET DISPOSITIF DE ROTATION

(30) Priorität: 12.07.2018 EP 18183186
(43) Veröffentlichungstag der Anmeldung: 15.01.2020
(73) Patentinhaber: Levitronix GmbH, 8048 Zürich (CH)
(72) Erfinder: Nussbaumer, Thomas Dr., 8049 Zürich (CH); Holenstein, Thomas, 5222 Umiken (CH)
(74) Vertreter: IPS Irsch AG

(56) Entgegenhaltungen:
- US-A- 5 587 617
- US-A- 5 686 772
- US-A1- 2007 080 595
- US-A1- 2010 282 528
- J.-P. YONNET: "Permanent magnet bearings and couplings", IEEE TRANSACTIONS ON MAGNETICS., vol. 17, no. 1, 1 January 1981 (1981-01-01), NEW YORK, NY, US, pages 1169 - 1173, XP055527088, ISSN: 0018-9464, DOI: 10.1109/TMAG.1981.1061166

## Beschreibung

Die Erfindung betrifft einen elektromagnetischen Drehantrieb sowie eine Rotationsvorrichtung gemäss dem Oberbegriff des unabhängigen Patentanspruchs der jeweiligen Kategorie.

Es sind elektromagnetische Drehantriebe bekannt, die nach dem Prinzip des lagerlosen Motors ausgestaltet sind und betrieben werden. Mit dem Begriff lagerloser Motor ist dabei ein elektromagnetischer Drehantrieb gemeint, bei welchem der Rotor vollkommen magnetisch bezüglich des Stators gelagert ist, wobei keine separaten magnetischen Lager vorgesehen sind. Der Stator ist dazu als Lager- und Antriebsstator ausgestaltet, der sowohl Stator des elektrischen Antriebs als auch Stator der magnetischen Lagerung ist. Mit den elektrischen Wicklungen des Stators lässt sich ein magnetisches Drehfeld erzeugen, welches zum einen ein Drehmoment auf den Rotor ausübt, das dessen Rotation bewirkt, und welches zum anderen eine beliebig einstellbare Querkraft auf den Rotor ausübt, sodass dessen radiale Position aktiv steuerbar bzw. regelbar ist. Somit sind drei Freiheitsgrade des Rotors aktiv regelbar, nämlich seine Rotation sowie seine radiale Position (zwei Freiheitsgrade). Bezüglich dreier weiterer Freiheitsgrade, nämlich seiner Position in axialer Richtung und Verkippungen bezüglich der zur Solldrehachse senkrechten radialen Ebene (zwei Freiheitsgrade), ist der Rotor passiv magnetisch, das heisst nicht ansteuerbar, durch Reluktanzkräfte gelagert bzw. stabilisiert. Das Nichtvorhandensein eines separaten magnetischen Lagers bei vollständiger magnetischer Lagerung des Rotors ist die Eigenschaft, welcher der lagerlose Motor seinen Namen verdankt.

Der lagerlose Motor ist dem Fachmann mittlerweile hinlänglich bekannt, und wird für zahlreiche verschiedene Anwendungen eingesetzt. Grundlegende Beschreibungen finden sich beispielsweise in der EP A 0 860 046 und in der EP-A-0 819 330.

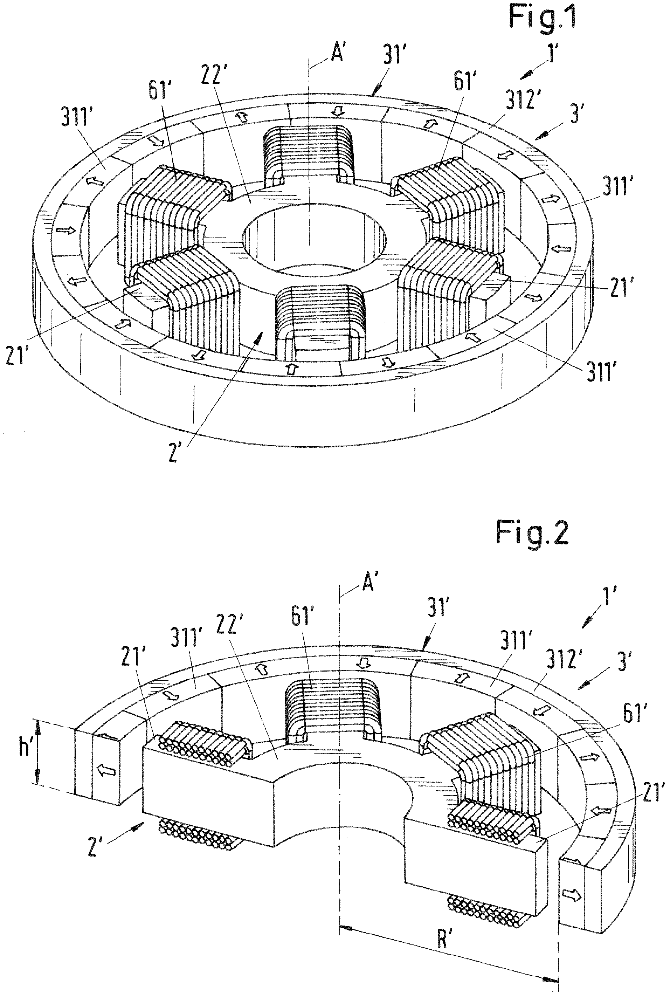

In Fig. 1 ist in einer perspektivischen Darstellung mit beispielhaftem Charakter eine mögliche Ausgestaltung eines lagerlosen Motors zu sehen, die vom Stand der Technik bekannt ist. Zum besseren Verständnis zeigt Fig. 2 noch eine perspektivische Schnittdarstellung des lagerlosen Motors aus Fig. 1, wobei der Schnitt in axialer Richtung A' erfolgt. Um anzuzeigen, dass es sich bei der Darstellung in Fig. 1 und Fig. 2 um eine Vorrichtung aus dem Stand der Technik handelt, sind hier die Bezugszeichen jeweils mit einem Hochkomma bzw. mit einem Strich versehen. Der lagerlose Motor ist gesamthaft mit dem Bezugszeichen 1' bezeichnet und hier als Aussenläufer ausgestaltet. Das heisst, der Stator 2' ist radial innenliegend angeordnet und wird von dem Rotor 3' umgeben.

Der Stator 2' umfasst eine Mehrzahl - hier sechs - ausgeprägte Statorpole 21', die sich jeweils von einem ringförmigen Rückschluss 22' in radialer Richtung nach aussen erstrecken. Dabei ist mit einer radialen Richtung eine Richtung gemeint, die senkrecht auf der axialen Richtung A' steht, welche durch die Solldrehachse des Rotors 3' definiert ist, also die Drehachse, um welche der Rotor 3' im Betriebszustand rotiert, wenn er bezüglich des Stators 2' in einer zentrierten und unverkippten Position ist. Der Rückschluss 22' und die Statorpole 21' sind aus einem ferromagnetischen Material hergestellt, beispielsweise aus Eisen.

In Fig. 1 und Fig. 2 ist von dem Rotor 3' nur der magnetisch wirksame Kern 31' des Rotors 3' dargestellt, welcher ringförmig und permanentmagnetisch ausgestaltet ist. Dazu umfasst der magnetisch wirksame Kern 31' eine Mehrzahl von Permanentmagneten 311', welche jeweils als ein Ringsegment ausgestaltet sind, wobei sich die Gesamtheit der Permanentmagnete 311' zu einem Ring ergänzen. Jeder Permanentmagnet 311' ist in radialer Richtung magnetisiert, wobei benachbarte Permanentmagnete 311' jeweils in entgegengesetzter Richtung magnetisiert sind, sodass in Umfangsrichtung gesehen die Permanentmagnete 311' wechselweise radial nach innen und radial nach aussen magnetisiert sind. Die Magnetisierung der einzelnen Permanentmagnete 311' ist jeweils durch den Pfeil ohne Bezugszeichen in den Permanentmagneten 311' dargestellt.

Der magnetisch wirksame Kern 31' weist ferner einen Rückschlussring 312' aus einem ferromagnetischen Material, beispielsweise Eisen, auf, welcher die Permanentmagnete 311' umschliesst, und welcher der Führung des magnetischen Flusses dient.

Um die für den magnetischen Antrieb und die magnetische Lagerung des Rotors 3' notwendigen elektromagnetischen Drehfelder zu erzeugen, tragen die Statorpole 21' Wicklungen. Bei der in Fig. 1 und Fig. 2 gezeigten Ausführungsform sind die Wicklungen beispielsweise so ausgestaltet, dass um jeden Statorpol 21' herum jeweils eine diskrete Spule 61' gewickelt ist. Mit diesen Spulen 61' werden im Betriebszustand diejenigen elektromagnetischen Drehfelder erzeugt, mit welchen ein Drehmoment auf den Rotor 3' bewirkt wird, und mit welchen eine beliebig einstellbare Querkraft in radialer Richtung auf den Rotor 3' ausübbar ist, sodass die radiale Position des Rotors 3', also seine Position in der zur axialen Richtung A' senkrechten radialen Ebene, aktiv steuerbar bzw. regelbar ist.

Bezüglich dreier weiterer Freiheitsgrade, nämlich der Position des Rotors 3' in axialer Richtung A' und Verkippungen (zwei Freiheitsgrade) ist der Rotor 3' passiv magnetisch, das heisst nicht ansteuerbar, durch Reluktanzkräfte gelagert bzw. stabilisiert.

Im Hinblick auf die passive magnetische Lagerung des Rotors 3' ist es bevorzugt, wenn der Innendurchmesser des magnetisch wirksamen Kerns 31' des Rotors 3' so bemessen ist, dass er mindestens 2,6-mal so gross ist wie die Höhe h' des magnetisch wirksamen Kerns 31' in axialer Richtung A'. In Fig. 2 ist mir R' der Innenradius des ringförmigen magnetisch wirksamen Kerns 31' des Rotors 3' bezeichnet. Es sollte somit die Bedingung 2 * R' ≥ 2.6 * h' erfüllt sein, das heisst, der Innendurchmesser des magnetisch wirksamen Kerns 31' sollte grösser sein als oder mindestens so gross sein wie das 2,6-fache seiner Höhe h' in axialer Richtung A'.

Elektromagnetische Drehantriebe, die nach dem Prinzip des lagerlosen Motors ausgestaltet sind, haben sich in einer Vielzahl von Anwendungen bewährt.

Aufgrund der Abwesenheit von mechanischen Lagern eignet sich der lagerlose Motor 1' insbesondere für Pump-, Misch- oder Rührvorrichtungen, mit denen sehr empfindliche Substanzen gefördert werden, beispielsweise Blutpumpen, oder bei denen sehr hohe Anforderungen an die Reinheit gestellt werden, beispielsweise in der pharmazeutischen Industrie oder in der biotechnologischen Industrie, oder mit denen abrasive oder aggressive Substanzen gefördert werden, welche mechanische Lager sehr schnell zerstören würden, beispielsweise Pumpen oder Mischer für Slurry in der Halbleiterindustrie. Auch werden lagerlose Motoren in der Halbleiterfertigung zum Tragen und Rotieren von Wafern verwendet, beispielsweise, wenn diese mit Photolack oder anderen Substanzen beschichtet bzw. behandelt werden.

Ein weiterer Vorteil des Prinzips des lagerlosen Motors ergibt sich bei der Ausgestaltung des Rotors als Integralrotor, der sowohl der Rotor des elektromagnetischen Antriebs ist, als auch der Rotor der Pumpe, oder des Rührers oder des Mischers oder der Halterung zum Rotieren eines Wafers. Neben der berührungslosen magnetischen Lagerung resultiert hier der Vorteil einer sehr kompakten und platzsparenden Ausgestaltung.

Zudem erlaubt das Prinzip des lagerlosen Motors auch Ausgestaltungen, bei denen der Rotor 3' sehr leicht vom Stator 2' trennbar ist. Dies ist ein sehr grosser Vorteil, weil damit beispielsweise der Rotor 3' als Einmalteil für den Einmalgebrauch ausgestaltet werden kann. Solche Einmalanwendungen ersetzen heute häufig Prozesse, bei denen früher aufgrund der sehr hohen Reinheitsanforderungen alle diejenigen Komponenten, welche im Prozess mit den zu behandelnden Substanzen in Kontakt kommen, aufwändig gereinigt und sterilisiert werden müssen, beispielsweise mittels Dampfsterilisierung. Bei der Ausgestaltung für den Einmalgebrauch werden diejenigen Komponenten, welche mit den zu behandelnden Substanzen in Kontakt kommen, nur genau einmal verwendet und dann bei der nächsten Anwendung durch neue, das heisst ungebrauchte, Einmalteile ersetzt.

Als Beispiele seien hier die Pharmaindustrie und die biotechnologische Industrie genannt. Hier werden häufig Lösungen und Suspensionen hergestellt, die eine sorgfältige Durchmischung oder Förderung von Substanzen verlangen.

In der Pharmaindustrie müssen beispielsweise bei der Herstellung von pharmazeutisch wirksamen Substanzen höchste Ansprüche an die Reinheit gestellt werden, oft müssen die mit den Substanzen in Kontakt kommenden Komponenten sogar steril sein. Ähnliche Anforderungen ergeben sich auch in der Biotechnologie, beispielsweise bei der Herstellung, Behandlung oder Züchtung von biologischen Substanzen, Zellen oder Mikroorganismen, wo ein extrem hohes Mass an Reinheit gewährleistet sein muss, um die Brauchbarkeit des hergestellten Produkts nicht zu gefährden. Als ein weiteres Beispiel seien hier Bioreaktoren genannt, in denen beispielsweise biologische Substitute für Gewebe oder spezielle Zellen oder andere sehr empfindliche Substanzen gezüchtet werden. Auch hier benötigt man Pump-, Rühr- oder Mischvorrichtungen, um beispielsweise eine kontinuierliche Durchmischung der Nährflüssigkeit beziehungsweise deren kontinuierliche Zirkulation im Mischbehälter zu gewährleisten. Dabei muss eine sehr hohe Reinheit gewährleistet sein, um die Substanzen oder die erzeugten Produkte vor Kontaminationen zu schützen.

Bei solchen Anwendungen setzt sich dann die Pump-, Rühr- oder Mischvorrichtung aus einer Einmalvorrichtung und einer wiederverwendbaren Vorrichtung zusammen. Dabei umfasst die Einmalvorrichtung diejenigen Komponenten, die mit den Substanzen in Kontakt kommen, und die als Einmal (single-use) -Teile für den Einmalgebrauch ausgestaltet sind. Dies ist beispielsweise der Pump- oder Mischbehälter mit dem darin vorgesehenen Rotor 3', der dann beispielsweise ein Flügelrad zum Fördern der Substanzen umfasst. Die wiederverwendbare Vorrichtung umfasst diejenigen Komponenten, die dauerhaft also mehrfach verwendet werden, beispielsweise den Stator 2'. Eine solche Vorrichtung ist zum Beispiel in der EP-B-2 065 085 offenbart.

Bei alle diesen Anwendungen, bei denen der lagerlose Motor erfolgreich eingesetzt wird, ist es prinzipiell möglich, den lagerlosen Motor als Innenläufer, das heisst mit innenliegendem Rotor und darum herum angeordneten Stator, oder als Aussenläufer (siehe Fig. 1), das heisst mit innenliegendem Stator 2' und darum herum angeordneten Rotor 3' auszugestalten. Insbesondere bei Ausgestaltungen als Aussenläufer hat es sich jedoch gezeigt, dass für manche Anwendungen die passive magnetische Stabilisierung des Rotors 3', speziell diejenige gegen Verkippungen, an ihre Grenzen gerät oder sogar nicht mehr ausreichend ist, um einen sicheren und störungsfreien Betrieb des Drehantriebs zu gewährleisten. Im Vergleich zum Innenläufer ist das maximal erreichbare verkippungsstabilisierende Moment beim Aussenläufer drastisch geringer. Diese deutlich reduzierte passive magnetische Stabilisierung gegen Verkippungen bei der Ausgestaltung als Aussenläufer ist in der Praxis für manche Anwendungen unzureichend.

US 5,686,772 offenbart ein Magnetlager und eine Anordnung mit einem Stator und mit einem Rotor, welcher mit einem solchen Lager gelagert ist. Der Rotor ist in einer radialen Ebene passiv magnetisch gelagert und in der axialen Richtung aktiv magnetisch gelagert.

US 2010/282528 offenbart eine elektromechanische Batterie mit einem Stützelement und einem rotierenden Rahmen, der eine Batterie trägt. Eine rotierende elektrische Verbindung zwischen dem Stützelement und der Batterie ist so ausgestaltet, dass die Batterie geladen und entladen werden kann, während der rotierende Rahmen rotiert.

J.-P. Yonnet: "Permanent magnetic bearings and couplings", IEEE TRANSACTIONS ON MAGNETICS, Bd. 17, Nr. 1, 1. Januar 198, Seiten 1169-1173 offenbart die Berechnung magnetischer Kräfte und Steifigkeiten basierend auf der Kopplungsenergie zwischen elementaren Dipolen.

US 2007/080595 offenbart eine supraleitende kontaktfreie Rotationsvorrichtung, bei welcher ein rotierender Permanentmagnet dazu genutzt wird, einen anderen Permanentmagneten kontaktfrei zu rotieren.

Ausgehend von diesem Stand der Technik ist es daher eine Aufgabe der Erfindung, einen elektromagnetischen Drehantrieb vorzuschlagen, der als Aussenläufer ausgestaltet ist, und der einen magnetisch berührungslos antreibbaren sowie magnetisch berührungslos lagerbaren Rotor umfasst, wobei die passive magnetische Stabilisierung des Rotors insbesondere gegenüber Verkippungen deutlich verbessert ist. Zudem ist es eine Aufgabe der Erfindung, eine Rotationsvorrichtung vorzuschlagen, die einen solchen Drehantrieb umfasst.

Die diese Aufgabe lösenden Gegenstände der Erfindung sind durch die Merkmale des unabhängigen Patentanspruchs der jeweiligen Kategorie gekennzeichnet.

Erfindungsgemäss wird also ein elektromagnetischer Drehantrieb vorgeschlagen, der als Aussenläufer ausgestaltet ist, mit einem Rotor, der einen ringförmigen und permanentmagnetisch ausgestalteten magnetisch wirksamen Kern umfasst, welcher um einen Stator herum angeordnet ist, und welcher eine magnetische Mittelebene hat, wobei der Stator als Lager- und Antriebsstator ausgestaltet ist, mit welchem der Rotor im Betriebszustand berührungslos magnetisch um eine Solldrehachse antreibbar ist, die eine axiale Richtung definiert, und mit welchem der Rotor berührungslos magnetisch bezüglich des Stators lagerbar ist, wobei der Rotor in einer zur axialen Richtung senkrechten radialen Ebene aktiv magnetisch gelagert ist, und in axialer Richtung sowie gegen Verkippungen passiv magnetisch stabilisiert ist, wobei der Stator (2) Spulen (61) umfasst, mit denen sich ein magnetisches Drehfeld erzeugen lässt, welches zum einen ein Drehmoment auf den magnetisch wirksamen Kern (31) des Rotors (3) ausübt, das dessen Rotation bewirkt, und welches zum anderen eine beliebig einstellbare Querkraft auf den magnetisch wirksamen Kern (31) des Rotors (3) ausübt, sodass dessen radiale Position -also seine Position in der radialen Ebene- aktiv steuerbar bzw. regelbar ist, und dass der Rotor einen magnetisch wirksamen Lagerring umfasst, der radial aussen liegend und beabstandet zu dem magnetisch wirksamen Kern des Rotors angeordnet ist, und wobei ein zusätzlicher Lagerstator mit einem magnetisch wirksamen Statorring zum Zusammenwirken mit dem Lagerring vorgesehen ist, wobei der zusätzliche Lagerstator derart ausgestaltet und angeordnet ist, dass der Statorring den Rotor passiv magnetisch gegen Verkippungen stabilisiert, wobei der Lagerring über ein Verbindungselement aus einem niederpermeablen Material mit dem magnetisch wirksamen Kern des Rotors verbunden ist wobei sowohl der Lagerring des Rotors als auch der Statorring des zusätzlichen Lagerstators jeweils mindestens einen Permanentmagneten umfassen, und wobei der zusätzliche Lagerstator einen Tragkörper zum Tragen des stationären Statorrings umfasst..

Durch das Zusammenwirken des zusätzlichen Lagerstators, genauer gesagt des magnetisch wirksamen Statorrings des zusätzlichen Lagerstators, mit dem magnetisch wirksamen Lagerring des Rotors lässt sich insbesondere eine deutlich verbesserte Stabilisierung des Rotors gegenüber Verkippungen bezüglich der radialen Ebene erreichen, wobei die radiale Ebene diejenige ist, in welcher die radiale Position des Rotors aktiv magnetisch geregelt wird. Der zusätzliche Lagerstator und der Lagerring des Rotors fungieren im Prinzip wie eine zusätzliche passive magnetische Axiallagerung des Rotors, welche insbesondere die Verkippungssteifigkeit des Rotors deutlich erhöht. Das maximale Verkippungen des Rotors bewirkende Drehmoment, welches mit der erfindungsgemässen Ausgestaltung kompensiert werden kann, ist beträchtlich grösser als bei bekannten elektromagnetischen Drehantrieben, die als Aussenläufer mit einem magnetisch gelagerten, scheiben- oder ringförmigen magnetisch wirksamen Rotorkern ausgestaltet sind, beispielsweise um mindestens einen Faktor 20. Hierdurch kann der erfindungsgemässe Drehantrieb für Anwendungen eingesetzt werden, für welche bekannte Ausführungsformen wenig oder gar nicht geeignet sind, weil die passiven Kräfte zur Stabilisierung des Rotors gegen Verkippungen bei diesen bekannten Ausführungsformen nicht ausreichend gross sind.

Der erfindungsgemässe Drehantrieb kombiniert in vorteilhafter Weise die bekannten Vorteile des Prinzips des lagerlosen Motors mit einer zusätzlichen passiven magnetischen Axiallagerung oder Axialstabilisierung des Rotors. Dazu hat der Rotor des erfindungsgemässen Drehantriebs zwei unterschiedliche magnetisch wirksame Bereiche, die zumindest im Wesentlichen durch das Verbindungselement aus einem niederpermeablen Material magnetisch voneinander entkoppelt sind: Der ringförmige magnetisch wirksame Kern des Rotors wirkt in an sich bekannter Weise nach dem Prinzip des lagerlosen Motors mit dem als Lager- und Antriebsstator ausgestalteten Stator zusammen. Der magnetisch wirksame Lagerring des Rotors, der radial aussenliegend zu dem magnetisch wirksamen Kern angeordnet ist, wirkt mit dem magnetisch wirksamen Statorring des zusätzlichen Lagerstators zusammen, wodurch eine zusätzliche passive magnetische Axiallagerung des Rotors bewirkt wird, welche insbesondere die Verkippungssteifigkeit des Rotors deutlich erhöht.

Bezüglich der Ausgestaltung der zusätzlichen passiven magnetischen Axiallagerung sind mehrere grundsätzliche Varianten möglich.

So ist es beispielsweise möglich, den magnetisch wirksamen Lagerring permanentmagnetisch auszugestalten und den Statorring des zusätzlichen Lagerstators ferromagnetisch auszugestalten. Dabei kann der Lagerring vollständig aus einem permanentmagnetischen Material bestehen, also beispielsweise als permanentmagnetischer Ring, einstückig oder aus mehreren permanentmagnetischen Segmenten zusammengesetzt, ausgestaltet sein, oder einen oder mehrere Permanentmagnete umfassen, welche durch ferromagnetische Zwischenstücke miteinander verbunden sind. Der Statorring kann dabei als ferromagnetischer Ring, beispielsweise als einstückiger oder segmentierter Ring, ausgestaltet sein, und insbesondere als Eisenring.

Eine andere Variante besteht darin, den magnetisch wirksamen Statorring des zusätzlichen Lagerstators permanentmagnetisch auszugestalten und den Lagerring des Rotors ferromagnetisch auszugestalten. Dabei kann der Statorring vollständig aus einem permanentmagnetischen Material bestehen, also beispielsweise als permanentmagnetischer Ring, einstückig oder aus mehreren permanentmagnetischen Segmenten zusammengesetzt, ausgestaltet sein, oder einen oder mehrere Permanentmagnete umfassen, welche durch ferromagnetische Zwischenstücke miteinander verbunden sind. Der Lagerring kann dabei als ferromagnetischer Ring, beispielsweise als einstückiger oder segmentierter Ring, ausgestaltet sein, und insbesondere als Eisenring.

Erfindungsgemäss umfassen sowohl der Lagerring des Rotors als auch der Statorring des zusätzlichen Lagerstators jeweils mindestens einen Permanentmagneten, sind also jeweils permanentmagnetisch ausgestaltet. Dabei können der Statorring und der Lagerring jeweils vollständig aus einem permanentmagnetischen Material bestehen, also beispielsweise jeweils als permanentmagnetischer Ring, einstückig oder aus mehreren permanentmagnetischen Segmenten zusammengesetzt, ausgestaltet sein, oder jeweils einen oder mehrere Permanentmagnete umfassen, welche beispielsweise durch ferromagnetische Zwischenstücke miteinander verbunden sind.

Gemäss einer bevorzugten Ausgestaltung ist der Lagerring des Rotors in der magnetischen Mittelebene des magnetisch wirksamen Kerns des Rotors angeordnet. Das heisst, der Lagerring des Rotors und der ringförmige magnetisch wirksame Kern des Rotors sind als konzentrische Ringe in der gleichen Ebene angeordnet, sodass der Lagerring den magnetisch wirksamen Kern mittig bezüglich der axialen Richtung umgibt.

In einer anderen, ebenfalls bevorzugte Ausgestaltung ist der Lagerring bezüglich der axialen Richtung mit einem von Null verschiedenen Abstand zu der magnetischen Mittelebene des magnetisch wirksamen Kerns des Rotors angeordnet, wobei gesagter Abstand höchstens ein Viertel, vorzugsweise höchstens ein Fünftel des Innenradius des Lagerrings beträgt. Bei dieser Ausgestaltung sind der ringförmige magnetisch wirksame Kern des Rotors und der Lagerring des Rotors parallel zueinander und jeweils zentriert bezüglich der axialen Richtung angeordnet, sodass ihre Zentren auf der gleichen Achse liegen, wobei der magnetisch wirksame Kern und der Lagerring bezüglich der axialen Richtung beabstandet angeordnet sind. Dabei kann der Lagerring - bezüglich der normalen Gebrauchslage - oberhalb oder unterhalb der magnetischen Mittelebene des magnetisch wirksamen Kerns angeordnet sein. Vorzugsweise ist dabei der Abstand des Lagerrings von der magnetischen Mittelebene höchstens ein Viertel und besonders bevorzugt höchstens ein Fünftel des Innenradius des Lagerrings, damit die destabilisierende Wirkung der zusätzlichen Axiallagerung die zusätzliche Stabilisierung gegen Verkippungen nicht übersteigt. Mit dem Abstand des Lagerrings von der magnetischen Mittelebene ist dabei der Abstand zwischen der Mittelebene des Lagerrings und der magnetischen Mittelebene in axialer Richtung gemeint.

Bezüglich der Anordnung des Statorrings gibt es mehrere Varianten. Gemäss einer bevorzugten Variante ist der Statorring des zusätzlichen Lagerstators konzentrisch mit dem Lagerring des Rotors angeordnet, derart dass der Statorring den Lagerring radial aussen liegend umgibt. Das heisst, der Lagerring des Rotors und der Statorring des zusätzlichen Lagerstators sind als konzentrische Ringe in der gleichen Ebene angeordnet, sodass der Statorring den Lagerring mittig bezüglich der axialen Richtung umgibt.

Gemäss einer anderen, ebenfalls bevorzugten Variante ist der Statorring des zusätzlichen Lagerstators bezüglich der axialen Richtung beabstandet zu dem Lagerring des Rotors angeordnet, wobei der Statorring vorzugsweise den gleichen Innenradius aufweist wie der Lagerring. Bei dieser Variante sind der Statorring des zusätzlichen Lagerstators und der Lagerring des Rotors parallel zueinander und jeweils zentriert bezüglich der axialen Richtung angeordnet, sodass ihre Zentren auf der gleichen Achse liegen, wobei der Statorring und der Lagerring bezüglich der axialen Richtung beabstandet angeordnet sind. Dabei kann der Statorring - bezüglich der normalen Gebrauchslage - oberhalb oder unterhalb des Lagerrings angeordnet sein, wobei besonders bevorzugt der Lagerring und der Statorring miteinander fluchtend bezüglich der axialen Richtung angeordnet sind.

Bezüglich der Ausgestaltung des Verbindungselements, welches den magnetisch wirksamen Kern des Rotors mit dem Lagerring des Rotors verbindet, sind mehrere Varianten möglich. Das Verbindungselement kann beispielsweise als vollständige Ringscheibe ausgestaltet sein, welche bezüglich der radialen Richtung zwischen dem ringförmigen magnetisch wirksamen Kern des Rotors und dem Lagerring des Rotors angeordnet ist. Vorzugsweise ist das Verbindungselement scheibenförmig ausgestaltet und weist optional eine Mehrzahl von Ausnehmungen auf, um den Materialbedarf für das Verbindungselement und sein Gewicht zu reduzieren.

Gemäss einer anderen, ebenfalls bevorzugten Variante umfasst das Verbindungselement eine Mehrzahl von Speichen, von denen sich jede in radialer Richtung zwischen dem magnetisch wirksamen Kern des Rotors und dem magnetisch wirksamen Lagerring des Rotors erstreckt.

Im Hinblick auf eine möglichst starke zusätzliche Stabilisierung und im Hinblick auf eine einfache Herstellung ist es bevorzugt, dass der Statorring und der Lagerring jeweils aus einem permanentmagnetischen Material bestehen und jeweils segmentiert mit einer Mehrzahl von Permanentmagneten ausgestaltet sind. Bei dieser bevorzugten Ausgestaltung bestehen also sowohl der Statorring als auch der Lagerring vollständig aus einem permanentmagnetischen Material. Dabei ist es aus herstellungstechnischen Gründen bevorzugt, wenn sowohl der Lagerring als auch der Statorring segmentiert ausgestaltet sind, d.h. sowohl der Statorring als auch der Lagerring umfassen jeweils eine Mehrzahl von Permanentmagneten, welche jeweils als ein Ringsegment ausgestaltet sind, wobei sich die Gesamtheit der Permanentmagnete zu einem Ring ergänzen.

Bezüglich der Magnetisierung des Statorrings und des Lagerrings gibt es mehrere Varianten.

Gemäss einer ersten bevorzugten Variante sind der Statorring und der Lagerring jeweils in axialer Richtung magnetisiert, wobei die Magnetisierung des Statorrings entgegengesetzt zur Magnetisierung des Lagerrings gerichtet ist.

Gemäss einer anderen, ebenfalls bevorzugten Variante sind der Statorring und der Lagerring jeweils in radialer Richtung magnetisiert, wobei die Magnetisierung des Statorrings und die Magnetisierung des Lagerrings gleich gerichtet sind, und wobei vorzugsweise die Magnetisierung des Statorrings und die Magnetisierung des Lagerrings jeweils radial nach aussen gerichtet sind.

Eine weitere bevorzugte Variante besteht darin, dass entweder der Statorring in axialer Richtung und der Lagerring in radialer Richtung magnetisiert ist, oder der Statorring in radialer Richtung und der Lagerring in axialer Richtung magnetisiert ist.

Durch die Erfindung wird ferner eine Rotationsvorrichtung zur Behandlung einer Oberfläche eines scheibenförmigen Körpers vorgeschlagen, mit welcher der Körper zur Behandlung rotierbar ist, welche Rotationsvorrichtung einen elektromagnetischen Drehantrieb umfasst, der erfindungsgemäss ausgestaltet ist, wobei der Rotor eine Halterung für den scheibenförmigen Körper umfasst. Mittels der Halterung kann der Körper auf dem Rotor gehalten werden, oder der Körper ist mittels der Halterung auf dem Rotor fixierbar. Eine solche Rotationsvorrichtung kann beispielsweise in der Halbleiterindustrie angewendet werden, um Oberflächen von Substraten, zum Beispiel die Oberfläche von Wafern für die Herstellung elektronischer Bauteile, mit Fluiden, z. B. Suspensionen, in kontrollierter Weise zu beaufschlagen, um deren Oberflächen zu bearbeiten. Als Beispiele seien hier chemisch-mechanische Polierprozesse (CMP) mittels Slurry, das Reinigen und/oder Ätzen von Wafern, das Auftragen von Fotolack oder das Entfernen von Fotolack mit Lösungsmitteln genannt. Neben diesen Nassprozessen, bei welchen die Wafer mit einem Fluid beaufschlagt werden, eignet sich die Rotationsvorrichtung auch für Trockenprozesse insbesondere in der Halbleiterindustrie. Beispiele für solche Trockenprozesse, bei denen die Wafer oder auch andere Komponenten oder Substrate rotiert werden, sind: Plasmaätzen, schnelle thermische Bearbeitung (RTP: rapid thermal processing), Atomlagenabscheidung (ALD: atomic layer deposition), chemische Gasphasenabscheidung (CVD: chemical vapor deposition), oder physikalische Gasphasenabscheidung (PVD: physical vapor deposition).

Bei solchen Nassprozessen oder Trockenprozessen werden typischerweise die Wafer in Form von dünnen Scheiben in einer Prozesskammer in schnelle Rotation versetzt und dann zur Behandlung mit dem jeweiligen Fluid beaufschlagt (Nassprozesse) oder mit der Strahlung bzw. den abzuscheidenden Substanzen beaufschlagt (Trockenprozesse). Dazu kann der zu behandelnde Wafer mittels der Halterung auf dem Rotor der erfindungsgemässen Rotationsvorrichtung befestigt und dann rotiert werden.

Durch die Erfindung wird ferner eine Rotationsvorrichtung zum Fördern, Mischen oder Rühren von Fluiden vorgeschlagen, wobei die Rotationsvorrichtung einen elektromagnetischen Drehantrieb umfasst, der erfindungsgemäss ausgestaltet ist, und wobei der Rotor des Drehantriebs als Rotor der Rotationsvorrichtung ausgestaltet ist. Diese auch als Integralrotor bezeichnete Ausführungsform ermöglicht eine besonders kompakte Ausgestaltung der Rotationsmaschine, weil der Rotor des elektromagnetischen Drehantriebs gleichzeitig auch der Rotor der Rotationsmaschine ist, mit welchem eine Kraft auf das zu fördernde bzw. zu mischende bzw. zu rührende Fluid ausgeübt wird.

Gemäss einer Ausführungsform weist der Rotor eine Mehrzahl von Flügeln zum Mischen oder Rühren von Fluiden auf, wobei die Flügel auf dem Verbindungselement angeordnet sind.

Die erfindungsgemässe Rotationsvorrichtung kann insbesondere auch so ausgestaltet sein, dass sie Komponenten für den Einmalgebrauch umfasst. In einer solchen Ausgestaltung hat die Rotationsvorrichtung vorzugsweise eine Einmalvorrichtung, die für den Einmalgebrauch ausgestaltet ist, sowie eine wiederverwendbaren Vorrichtung, die für den Mehrfachgebrauch ausgestaltet ist, wobei die Einmalvorrichtung zumindest den Rotor umfasst, welcher optional eine Mehrzahl von Flügeln zum Fördern, Pumpen, Mischen oder Rühren von Fluiden aufweist, und wobei die wiederverwendbare Vorrichtung zumindest den Stator und den zusätzlichen Lagerstator umfasst, mit welchen der Rotor im Betriebszustand berührungslos magnetisch antreibbar und lagerbar ist. Falls die Rotationsvorrichtung als Misch- oder Rührvorrichtung ausgestaltet ist, so umfassen die Komponenten für den Einmalgebrauch vorzugsweise auch den beispielsweise flexiblen Mischbehälter, in welchem der Rotor angeordnet ist.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der teilweise schematischen Zeichnung zeigen (teilweise im Schnitt):
- Fig. 1:: eine perspektivische Darstellung eines als lagerloser Motor ausgestalteten elektromagnetischen Drehantriebs gemäss dem Stand der Technik,
- Fig. 2:: eine perspektivische Schnittdarstellung des Antriebs aus Fig. 1,
- Fig. 3:: eine perspektivische Schnittdarstellung eines ersten Ausführungsbeispiels eines erfindungsgemässen elektromagnetischen Drehantriebs,
- Fig. 4:: einen schematischen Schnitt in axialer Richtung durch das erste Ausführungsbeispiel aus Fig. 3,
- Fig. 5:: eine Variante des ersten Ausführungsbeispiels in einer perspektivischen Schnittdarstellung,
- Fig. 6:: einen schematischen Schnitt in axialer Richtung durch die Variante aus Fig. 5,
- Fig. 7:: eine perspektivische Schnittdarstellung eines zweiten Ausführungsbeispiels eines erfindungsgemässen elektromagnetischen Drehantriebs,
- Fig. 8:: einen schematischen Schnitt in axialer Richtung durch das zweite Ausführungsbeispiel aus Fig. 7,
- Fig. 9:: eine Variante des zweiten Ausführungsbeispiels in einer perspektivischen Schnittdarstellung,
- Fig. 10:: einen schematischen Schnitt in axialer Richtung durch die Variante aus Fig. 9,
- Fig. 11:: eine erste Variante für die Ausgestaltung des Verbindungselements in einer perspektivischen Darstellung,
- Fig. 12:: die erste Variante aus Fig. 11 in einer perspektivischen Schnittdarstellung,
- Fig. 13:: eine zweite Variante für die Ausgestaltung des Verbindungselements in einer perspektivischen Darstellung,
- Fig. 14:: die zweite Variante aus Fig. 13 in einer perspektivischen Schnittdarstellung,
- Fig. 15:: eine Variante für die Ausgestaltung des Lagerrings und des Statorrings in einer perspektivischen Darstellung,
- Fig. 16:: die Variante aus Fig. 15 in einer perspektivischen Schnittdarstellung,
- Fig. 17-21:: verschiedene Varianten für die Magnetisierung des Lagerrings und des Statorrings, jeweils in einer schematischen Schnittdarstellung,
- Fig. 22:: eine perspektivische Darstellung eines Ausführungsbeispiels einer erfindungsgemässen Rotationsvorrichtung, die zur Behandlung einer Oberfläche eines scheibenförmigen Körpers ausgestaltet ist,
- Fig. 23:: eine perspektivische Schnittdarstellung des Ausführungsbeispiels aus Fig. 22,
- Fig. 24:: einen schematischen Schnitt in axialer Richtung durch das Ausführungsbeispiel aus Fig. 22,
- Fig. 25:: eine perspektivische Darstellung einer Variante des Ausführungsbeispiels aus Fig. 22,
- Fig. 26:: eine perspektivische Schnittdarstellung der Variante aus Fig. 24,
- Fig. 27:: einen schematischen Schnitt in axialer Richtung durch die Variante aus Fig. 25,
- Fig. 28:: eine perspektivische Darstellung eines Ausführungsbeispiels einer erfindungsgemässen Rotationsvorrichtung zum Fördern, Mischen oder Rühren von Fluiden,
- Fig. 29:: eine perspektivische Schnittdarstellung des Ausführungsbeispiels aus Fig. 28, und
- Fig. 30:: einen schematischen Schnitt in axialer Richtung durch das Ausführungsbeispiel aus Fig. 28.

Wie bereits erwähnt und erläutert, ist in Fig. 1 und Fig. 2 ein elektromagnetischer Drehantrieb dargestellt, der aus dem Stand der Technik bekannt ist, und welcher als lagerloser Motor ausgestaltet ist.

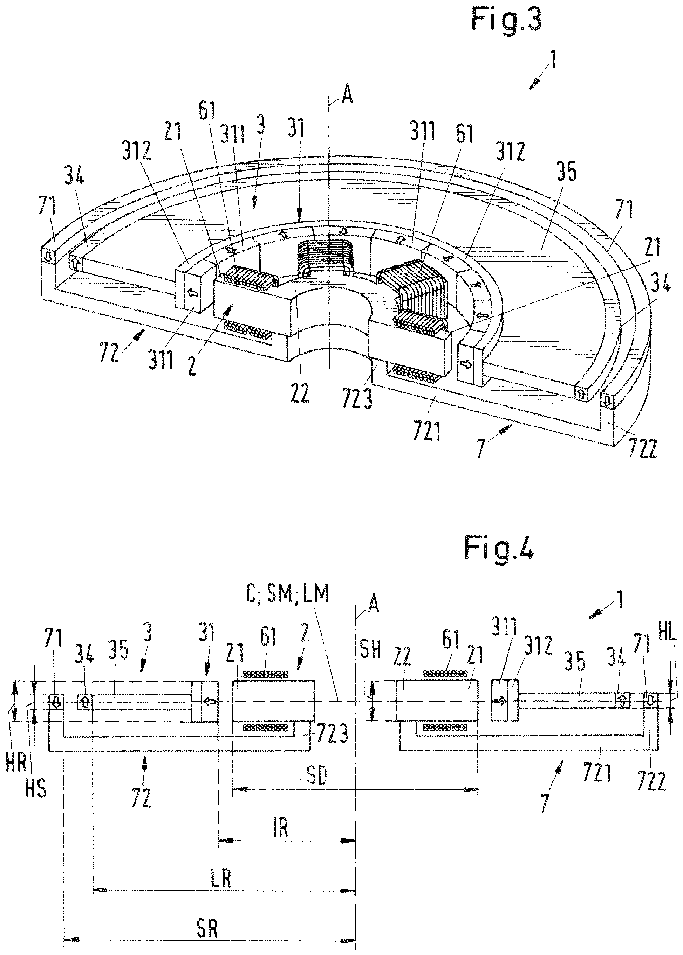

Fig. 3 zeigt eine perspektivische Schnittdarstellung eines ersten Ausführungsbeispiels eines erfindungsgemässen elektromagnetischen Drehantriebs, der gesamthaft mit dem Bezugszeichen 1 bezeichnet ist. Zum besseren Verständnis zeigt. Fig. 4 noch einen schematischen Schnitt in axialer Richtung durch dieses erste Ausführungsbeispiel. Der Drehantrieb 1 ist als Aussenläufer ausgestaltet und umfasst einen Stator 2 sowie einen bezüglich des Stators 2 berührungslos magnetisch gelagerten Rotor 3. Ferner ist der Rotor 3 mittels des Stators 2 berührungslos magnetisch zur Rotation um eine Solldrehachse antreibbar. Die Solldrehachse bezeichnet dabei diejenige Achse, um welche sich der Rotor 3 im Betriebszustand dreht, wenn sich der Rotor 3 bezüglich des Stators 2 in einer zentrierten und unverkippten Lage befindet. Diese Solldrehachse definiert eine axiale Richtung A. Üblicherweise stimmt die die axiale Richtung A festlegende Solldrehachse mit der Mittelachse des Stators 2 überein.

Im Folgenden wird mit einer radialen Richtung eine Richtung bezeichnet, welche senkrecht auf der axialen Richtung A steht.

Der Stator 2 umfasst eine Mehrzahl - hier sechs - ausgeprägte Statorpole 21, die sich jeweils von einem radial innenlegenden ringförmigen Rückschluss 22 in radialer Richtung nach aussen erstrecken. Um die für den magnetischen Antrieb und die magnetische Lagerung des Rotors 3 notwendigen elektromagnetischen Drehfelder zu erzeugen, tragen die Statorpole 21 Wicklungen. Bei dem in Fig. 3 und Fig. 4 gezeigten Ausführungsbeispiel sind die Wicklungen beispielsweise so ausgestaltet, dass um jeden Statorpol 21 herum jeweils eine diskrete Spule 61 gewickelt ist. Mit diesen Spulen 61 werden im Betriebszustand diejenigen elektromagnetischen Drehfelder erzeugt, mit welchen ein Drehmoment auf den Rotor 3 bewirkt wird, und mit welchen eine beliebig einstellbare Querkraft in radialer Richtung auf den Rotor 3 ausübbar ist, sodass die radiale Position des Rotors 3, also seine Position in der zur axialen Richtung A senkrechten radialen Ebene, aktiv steuerbar bzw. regelbar ist.

Der Rotor 3 umfasst einen magnetisch wirksamen Kern 31, welcher in Form einer Ringscheibe, beziehungsweise eines kreiszylindrischen Rings mit der Höhe HR in axialer Richtung A und mit dem Innenradius IR ausgestaltet ist. Wie dies bei einem Aussenläufer üblich ist, ist der Rotor 3 bzw. sein magnetisch wirksamer Kern 31 um den Stator 2 herum angeordnet, sodass der Stator 2 radial innenliegend bezüglich des magnetisch wirksamen Kerns 31 des Rotors 3 angeordnet ist und die Statorpole 21 dem sie umgebenden magnetisch wirksamen Kern 31 gegenüber liegen. Mit dem "magnetisch wirksamen Kern 31" des Rotors 3 ist derjenige Bereich des Rotors 3 gemeint, welcher für die Drehmomentbildung sowie für die Erzeugung der magnetischen Lagerkräfte magnetisch mit den Statorpolen 21 zusammenwirkt.

Bei dem In Fig. 3 und Fig. 4 dargestellten ersten Ausführungsbeispiel ist der magnetisch wirksame Kern 31 des Rotors 3 ringförmig und permanentmagnetisch ausgestaltet. Dazu umfasst der magnetisch wirksame Kern 31 eine Mehrzahl von Permanentmagneten 311, welche jeweils als ein Ringsegment ausgestaltet sind, wobei sich die Gesamtheit der Permanentmagnete 311 zu einem Ring ergänzen. Jeder Permanentmagnet 311 ist in radialer Richtung magnetisiert, wobei benachbarte Permanentmagnete 311 jeweils in entgegengesetzter Richtung magnetisiert sind, sodass in Umfangsrichtung gesehen die Permanentmagnete 311 wechselweise radial nach innen und radial nach aussen magnetisiert sind. Die Magnetisierung der einzelnen Permanentmagnete 311 ist jeweils durch den Pfeil ohne Bezugszeichen in dem jeweiligen Permanentmagnet 311 dargestellt.

Als Permanentmagnete bezeichnet man üblicherweise solche ferromagnetischen oder ferrimagnetischen Werkstoffe, die hartmagnetisch sind, also eine hohe Koerzitivfeldstärke aufweisen. Die Koerzitivfeldstärke ist diejenige magnetische Feldstärke, die man benötigt, um einen Stoff zu entmagnetisieren. Im Rahmen dieser Anmeldung wird unter einem Permanentmagneten ein Werkstoff verstanden, der eine Koerzitivfeldstärke, genauer gesagt eine Koerzitivfeldstärke der magnetischen Polarisation aufweist, die mehr als 10'000 A/m beträgt.

Der magnetisch wirksame Kern 31 weist ferner einen Rückschlussring 312 aus einem ferromagnetischen Material auf, welcher die Permanentmagnete 311 radial aussenliegend umschliesst, und welcher der Führung des magnetischen Flusses dient.

Sowohl der ringförmige Rückschluss 22 als auch die Statorpole 21 des Stators 2 als auch der Rückschlussring 312 des magnetisch wirksamen Kerns 31 des Rotors 3 sind jeweils aus einem weichmagnetischen Material gefertigt, weil sie als Flussleitelemente zur Führung des magnetischen Flusses dienen. Geeignete weichmagnetische Materialien sind beispielsweise ferromagnetische oder ferrimagnetische Materialien, also insbesondere Eisen, Nickel-Eisen oder Silizium-Eisen. Hierbei ist insbesondere bei dem Stator 2 eine Ausgestaltung als Statorblechpaket bevorzugt, bei welcher die Statorpole 21 und der Rückschluss 22 geblecht ausgestaltet sind, das heisst sie bestehen aus mehreren dünnen Elementen, die gestapelt sind. Auch der Rückschlussring 312 des magnetisch wirksamen Kerns 31 des Rotors 3 kann geblecht ausgestaltet sein.

Während des Betriebs des Drehantriebs 1 wirkt der magnetisch wirksame Kern 31 des Rotors 3 mit den Statorpolen 21 des Stators 2 nach dem eingangs beschriebenen Prinzip des lagerlosen Motors zusammen, bei welchem der Rotor 3 berührungslos magnetisch antreibbar und berührungslos magnetisch bezüglich des Stators 2 lagerbar ist. Dazu ist der Stator 2 als Lager- und Antriebsstator ausgestaltet, mit welchem der Rotor 3 im Betriebszustand berührungslos magnetisch um die Solldrehachse antreibbar - also in Rotation versetzbar- und bezüglich des Stators 2 berührungslos magnetisch lagerbar ist.

Das Prinzip des lagerlosen Motors ist dem Fachmann mittlerweile hinlänglich bekannt, sodass eine detaillierte Beschreibung der Funktion nicht mehr notwendig ist. Mit dem Prinzip des lagerlosen Motors ist gemeint, dass der Rotor 3 vollkommen magnetisch gelagert ist, wobei der Stator 2 als Lager- und Antriebsstator ausgestaltet, der sowohl Stator des elektrischen Antriebs als auch Stator der magnetischen Lagerung ist. Dabei umfasst der Stator 2 Wicklungen, hier die Spulen 61, mit denen sowohl die Antriebsfunktion als auch die Lagerfunktion realisiert wird. Mit den Spulen 61 lässt sich ein magnetisches Drehfeld erzeugen, welches zum einen ein Drehmoment auf den magnetisch wirksamen Kern 31 des Rotors 3 ausübt, das dessen Rotation bewirkt, und welches zum anderen eine beliebig einstellbare Querkraft auf den magnetisch wirksamen Kern 31 des Rotors 3 ausübt, sodass dessen radiale Position -also seine Position in der radialen Ebene- aktiv steuerbar bzw. regelbar ist. Beim lagerlosen Motor wird also im Unterschied zu klassischen Magnetlagern die magnetische Lagerung und der Antrieb des Motors über elektromagnetische Drehfelder realisiert, die ein Drehmoment und eine einstellbare Querkraft auf den magnetisch wirksamen Kern 31 des Rotors 3 ausüben. Die hierfür benötigten Drehfelder können entweder mit unterschiedlichen Spulen generiert werden, oder die Drehfelder können durch rechnerische Überlagerung der benötigten Ströme und dann mithilfe eines einzigen Spulensystems, hier den Spulen 61, generiert werden. Es ist also bei einem lagerlosen Motor nicht möglich, den elektromagnetischen Fluss, der von den Spulen 61 des Stators 2 generiert wird, aufzuteilen in einen elektromagnetischen Fluss, der nur für den Antrieb des Rotors sorgt und einen elektromagnetischen Fluss, der nur die magnetische Lagerung des Rotors realisiert.

Gemäss dem Prinzip des lagerlosen Motors sind zumindest drei Freiheitsgrade des Rotors 3, nämlich seine Position in der radialen Ebene und seine Rotation, aktiv regelbar. Bezüglich seiner axialen Auslenkung in axialer Richtung A ist der magnetisch wirksame Kern 31 des Rotors 3 passiv magnetisch, das heisst nicht ansteuerbar, durch Reluktanzkräfte stabilisiert. Auch bezüglich der verbleibenden zwei Freiheitsgrade, nämlich Verkippungen bezüglich der zur Solldrehachse senkrechten radialen Ebene ist der magnetisch wirksame Kern 31 des Rotors 3 ebenfalls passiv magnetisch stabilisiert. Der Rotor 3 ist also durch das Zusammenwirken des magnetisch wirksamen Kerns 31 mit den Statorpolen 21 in axialer Richtung A sowie gegen Verkippungen (insgesamt drei Freiheitsgrade) passiv magnetisch gelagert oder passiv magnetisch stabilisiert und in der radialen Ebene (zwei Freiheitsgrade) aktiv magnetisch gelagert.

Wie dies allgemein üblich ist bezeichnet auch im Rahmen dieser Anmeldung eine aktive magnetische Lagerung eine solche, die aktiv steuer- bzw. regelbar ist, beispielsweise über die mit den Spulen 61 generierten elektromagnetischen Drehfelder. Eine passive magnetische Lagerung oder eine passive magnetische Stabilisierung bezeichnet eine solche, die nicht ansteuerbar bzw. regelbar ist. Die passive magnetische Lagerung oder Stabilisierung basiert beispielsweise auf Reluktanzkräften, welche den Rotor 3 bei einer Auslenkung aus seiner Gleichgewichtslage, also z. B. bei einer Verschiebung in axialer Richtung oder bei einer Verkippung, wieder in seine Gleichgewichtslage bringen.

Ferner wird mit der magnetischen Mittelebene C des magnetisch wirksamen Kerns 31 des Rotors 3 diejenige Ebene senkrecht zur axialen Richtung A bezeichnet, in welcher der magnetisch wirksame Kern 31 des Rotors 3 im Betriebszustand gelagert wird, wenn der Rotor 3 nicht verkippt ist. In der Regel ist bei einem ringförmigen magnetisch wirksamen Kern 31 die magnetische Mittelebene C die geometrische Mittelebene des magnetisch wirksamen Kerns 31 des Rotors 3, die senkrecht zur axialen Richtung A liegt. Diejenige Ebene, in welcher der magnetisch wirksame Kern 31 des Rotors 3 im Betriebszustand im Stator 2 gelagert wird, wird auch als radiale Ebene bezeichnet. Die radiale Ebene definiert die x-y-Ebene eines kartesischen Koordinatensystems, dessen z-Achse in axialer Richtung A verläuft. Ist der magnetisch wirksame Kern 31 des Rotors 3 nicht verkippt, so stimmt die radiale Ebene mit der magnetischen Mittelebene C überein.

Mit der radialen Position des magnetisch wirksamen Kerns 31 bzw. des Rotors 3 wird die Lage des Rotors 3 in der radialen Ebene bezeichnet.

Mit einer Radiallagerung oder einer radialen Lagerung wird eine Lagerung des Rotors 3 bezeichnet, mit welcher die radiale Position des Rotors 3 stabilisiert werden kann, also eine Lagerung, welche den Rotor 3 in der radialen Ebene und damit bezüglich seiner radialen Position lagert.

Mit einer Axiallagerung oder einer axialen Lagerung bzw. mit einer Axialstabilisierung oder einer axialen Stabilisierung wird eine Lagerung bzw. eine Stabilisierung des Rotors 3 bezeichnet, mit welcher zum einen die Position des Rotors 3 bezüglich der axialen Richtung A stabilisiert wird, und mit welcher zum anderen der Rotor 3 gegen Verkippungen stabilisiert ist. Solche Verkippungen stellen zwei Freiheitsgrade dar und bezeichnen Auslenkungen, bei denen die momentane Drehachse des Rotors 3 nicht mehr genau in die axiale Richtung A zeigt, sondern einen von Null verschiedenen Winkel mit der Solldrehachse einschliesst. Bei einer Verkippung liegt also die magnetische Mittelebene C nicht mehr in oder parallel zur radialen Ebene, sondern die magnetische Mittelebene C schliesst einen von Null verschiedenen Winkel mit der radialen Ebene ein.

Wie bereits erwähnt, wirkt der magnetisch wirksame Kern 31 des Rotors 3 mit den Statorpolen 21 des Stators 2 nach dem Prinzip des lagerlosen Motors zusammen. Durch dieses Zusammenwirken wird die Rotation des Rotors 3 angetrieben. Ferner wird durch das Zusammenwirken eine aktiv magnetische Radiallagerung des Rotors 3 realisiert, und der Rotor 3 ist passiv magnetisch gegen Verkippungen stabilisiert.

Im Hinblick auf die passive magnetische Lagerung des Rotors 3 ist es bevorzugt, wenn der Innendurchmesser des magnetisch wirksamen Kerns 31 des Rotors 3 so bemessen ist, dass er mindestens 1,3-mal so gross ist wie die Höhe HR des magnetisch wirksamen Kerns 31 in axialer Richtung A. In Fig. 4 ist mir IR der Innenradius des ringförmigen magnetisch wirksamen Kerns 31 des Rotors 3 bezeichnet. Es sollte somit die Bedingung 2 * IR ≥ 1.3 * HR erfüllt sein, das heisst, der Innendurchmesser sollte grösser sein als oder mindestens so gross sein wie das 1,3-fache der Höhe HR.

Eine weitere vorteilhafte Massnahme im Hinblick auf die passive magnetische Lagerung des Rotors 3 ist es, wenn die Statorpole 21 so bemessen sind, dass der Aussendurchmesser SD (Fig. 4) des Stators 2 mindestens 2,6-mal so gross ist wie die Höhe SH der Statorpole 21 in axialer Richtung A. Der Aussendurchmesser SD des Stators 2 ist dabei durch die Erstreckung der Statorpole 21 in radialer Richtung gegeben. Es ist also vorteilhaft, wenn die Bedingung SD ≥ 2.6 * SH erfüllt ist, das heisst, der Aussendurchmesser SD des Stators 2 sollte grösser sein als oder mindestens so gross sein wie das 2,6-fache der Höhe SH der Statorpole 21.

Gemäss der Darstellung in Fig. 3 und in Fig. 4 ist die Höhe SH der Statorpole 21 gleich gross wie die Höhe HR des magnetisch wirksamen Kerns 31 des Rotors 3. Dies ist zwar eine mögliche Ausgestaltung, aber keinesfalls notwendig. Es sind auch Ausführungsformen möglich, bei denen die Höhe SH der Statorpole 21 kleiner oder grösser ist als die Höhe HR des magnetisch wirksamen Kerns 31 des Rotors 3.

Die vorangehend beschriebene Ausgestaltung des magnetisch wirksamen Kerns 31 des Rotors 3 und des Stators 2 ist zwar eine bevorzugte Ausgestaltung, ist jedoch nur beispielhaft zu verstehen.

Der magnetisch wirksame Kern 31 des Rotors kann auch andere Formen der Magnetisierung aufweisen. Auch kann der magnetisch wirksame Kern 31 vollkommen ohne Permanentmagnete ausgestaltet sein, welche zum Antriebsdrehmoment bzw. zur Erzeugung der Lagerkräfte beitragen. So kann der magnetisch wirksame Kern 31 auch rein ferromagnetisch, beispielsweise als Reluktanzläufer ausgestaltet sein.

Auch bezüglich des Stators 2 gibt es zahlreiche an sich bekannte Ausgestaltungsformen. So können beispielsweise im Stator ein Permanentmagnet oder mehrere Permanentmagnete vorgesehen sein, oder der Stator 2 kann als Stator eines Tempelmotors ausgestaltet sein, mit L-förmigen Statorpolen, wobei sich die langen Schenkel des L jeweils in axialer Richtung A erstrecken und der magnetisch wirksame Kern des Rotors um die kurzen, radial nach aussen ausgerichteten Schenkel des L herum angeordnet ist. Die Spulen sind dann um diese langen Schenkel herum angeordnet, also unterhalb der magnetischen Mittelebene des magnetisch wirksamen Kerns des Rotors.

Die Regelung bzw. die Steuerung eines elektromagnetischen Drehantriebs, der nach dem Prinzip des lagerlosen Motors betrieben wird, sowie die dafür benötigte Sensorik, z. B. Positionssensoren und/oder Winkelsensoren, sind dem Fachmann hinreichend bekannt und bedürfen daher hier keiner Erläuterung mehr.

Um die passive magnetische Stabilisierung des Rotors 3 insbesondere gegenüber Verkippungen deutlich zu verbessern, ist erfindungsgemäss ein zusätzlicher Lagerstator 7 vorgesehen, welcher mit einem magnetisch wirksamen Lagerring 34 des Rotors 3 zusammenwirkt. Dies wird im Folgenden anhand des ersten Ausführungsbeispiels näher erläutert.

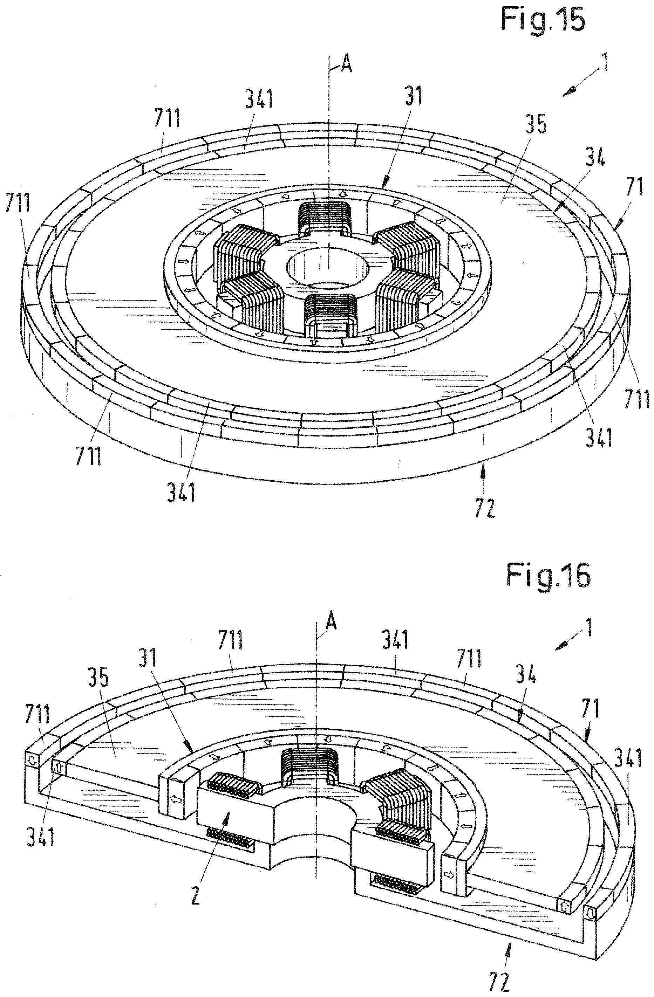

Der Rotor 3 umfasst den magnetisch wirksamen Lagerring 34, der radial aussenliegend und beabstandet zu dem magnetisch wirksamen Kern 31 des Rotors 3 angeordnet ist. Der Lagerring 34 ist als ein permanentmagnetischer Ring mit einem Innenradius LR ausgestaltet, wobei der Ring in axialer Richtung A magnetisiert ist, darstellungsgemäss (Fig. 3 und Fig. 4) in axialer Richtung A nach oben. Die Magnetisierung des Lagerrings 34 ist durch die Pfeile ohne Bezugszeichen (im Lagerring 34) angezeigt. Der Lagerring 34 kann als ein einstückiger permanentmagnetischer Ring ausgestaltet sein, oder segmentiert, das heisst aus einer Mehrzahl von ringsegmentförmigen Permanentmagneten zusammengesetzt sein, die in ihrer Gesamtheit den Lagerring 34 bilden (siehe auch Fig. 15 und Fig. 16). Bei dem ersten Ausführungsbeispiel ist der Lagerring 34 in der magnetischen Mittelebene C des magnetisch wirksamen Kerns 31 des Rotors 3 angeordnet, das heisst die geometrische Mittelebene LM des Lagerrings 34, die sich senkrecht zur axialen Richtung A erstreckt, liegt in der magnetischen Mittelebene C des magnetisch wirksamen Kerns 31 des Rotors 3. Der ringförmige magnetisch wirksame Kern 31 und der Lagerring 34 sind konzentrisch angeordnet, das heisst, sie haben einen gemeinsamen Mittelpunkt. Bezüglich der axialen Richtung A ist der Lagerring 34 zentriert zum magnetisch wirksamen Kern 31 angeordnet.

In axialer Richtung A weist der Lagerring 34 eine Höhe HL auf, die vorzugsweise kleiner ist als die Höhe HR des magnetisch wirksamen Kerns 31. Es sind aber auch Ausgestaltungen möglich, bei denen die Höhe HL des Lagerrings 34 gleich gross ist wie die Höhe HR des magnetisch wirksamen Kerns 31 oder auch grösser als die Höhe HR des magnetisch wirksamen Kerns 31.

Der Lagerring 34 und der magnetisch wirksame Kern 31 sind über ein ringscheibenförmiges Verbindungselement 35 miteinander verbunden, welches bezüglich der radialen Richtung zwischen dem magnetisch wirksamen Kern 31 und dem Lagerring 34 angeordnet ist. Das Verbindungselement 35 erstreckt sich bezüglich der radialen Richtung von dem Rückschlussring 312 des magnetisch wirksamen Kerns 31 bis zu dem Lagerring 34. Dazu hat das Verbindungselement 35 einen Aussenradius, der gleich dem Innenradius LR des Lagerrings 34 ist.

Das Verbindungselement 35 besteht aus einem niederpermeablen Material, also aus einem Material, das nur eine geringe magnetische Permeabilität (magnetische Leitfähigkeit) aufweist, sodass der magnetisch wirksame Kern 31 und der magnetisch wirksame Lagerring 34 magnetisch voneinander entkoppelt sind. D.h. es kann zumindest kein wesentlicher magnetischer Fluss zwischen dem Lagerring 34 und dem magnetischen wirksamen Kern 31 durch das Verbindungselement 35 fliessen.

Dieses niederpermeable Material kann beispielsweise ein Kunststoff sein, oder ein paramagnetisches Metall, z. B. Aluminium oder ein Edelstahl, oder ein diamagnetisches Metall, oder auch Kombinationen dieser Materialien. Als niederpermeabel werden im Rahmen dieser Anmeldung -wie allgemein üblichsolche Materialien verstanden, deren Permeabilitätszahl (relative Permeabilität) nur wenig oder gar nicht von 1 (Permeabilitätszahl des Vakuums) abweicht. Jedenfalls hat ein niederpermeables Material eine Permeabilitätszahl die kleiner als 1.1 ist. Das niederpermeable Material, aus welchem das Verbindungselement 35 besteht, bildet Flussbarrieren für den magnetischen Fluss, weil das niederpermeable Material eine deutlich geringere magnetische Leitfähigkeit aufweist als beispielsweise das ferromagnetische Material, aus welchem der Rückschlussring 312 gefertigt ist.

Um den magnetisch wirksamen Kern 31 möglichst gut von dem Lagerring 34 magnetisch zu entkoppeln, ist es vorteilhaft, wenn der Abstand in radialer Richtung zwischen dem magnetisch wirksamen Kern 31 und dem Lagerring 34 möglichst gross ist. Vorteilhafterweise ist der Lagerring 34 so bemessen, dass sein Innenradius LR mindestens das 1,1-fache, vorzugsweise mindestens das 1,3-fache, und besonders bevorzugt mindestens das 1,6-fache des Aussenradius des ringförmigen magnetisch wirksamen Kerns 31 beträgt.

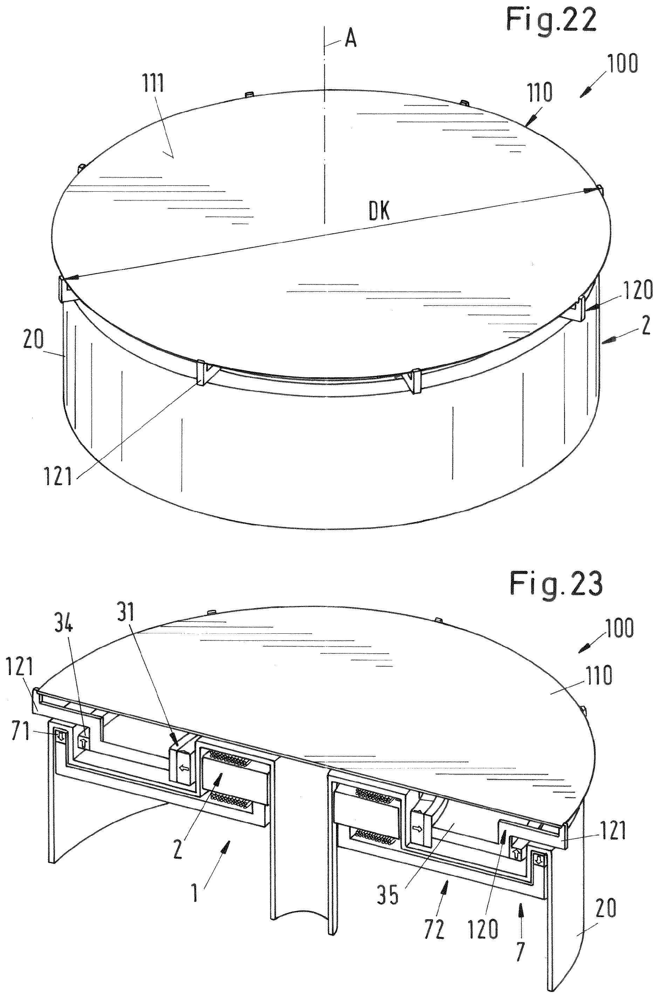

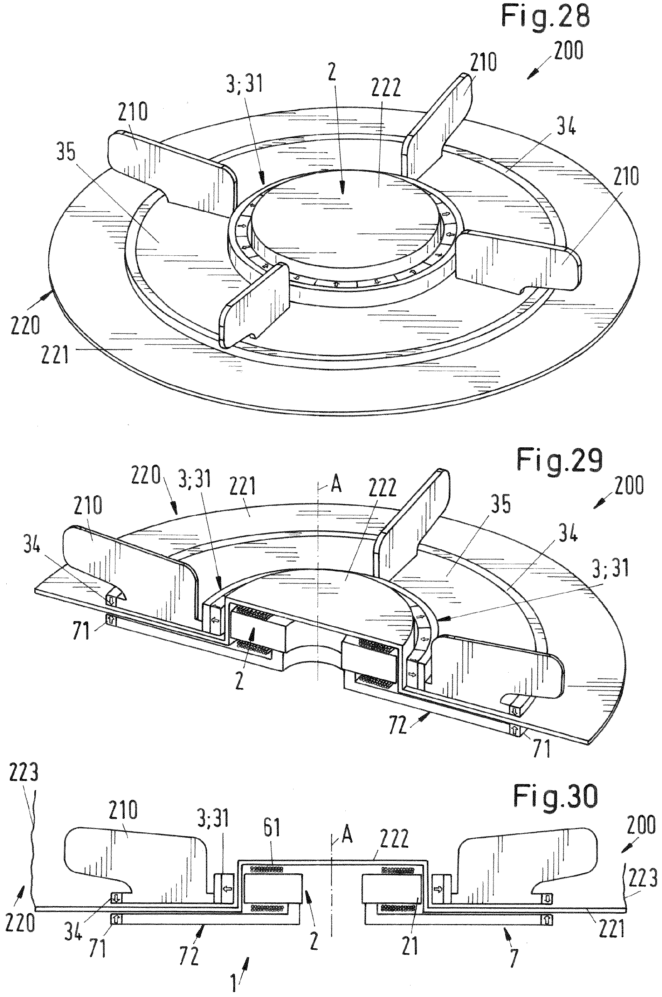

Da es für das Verständnis der Erfindung ausreichend ist, sind in der Zeichnung, z. B. in den Fig. 3 und Fig. 4, von dem Rotor 3 jeweils nur der magnetisch wirksame Kern 31, das Verbindungselement 35 und der Lagerring 34 dargestellt. Es versteht sich, dass der Rotor 3 natürlich auch noch weitere Komponenten umfassen kann wie beispielsweise Ummantelungen oder Kapselungen, die vorzugsweise aus einem Kunststoff hergestellt sind, oder Flügel zum Mischen, Rühren oder Pumpen von Fluiden (siehe z. B. Fig. 28), oder Halterungen für zu rotierende Körper (siehe z. B. Fig. 23) oder sonstige Komponenten.

Der zusätzliche Lagerstator 7 umfasst einen magnetisch wirksamen Statorring 71, welcher zum Zusammenwirken mit dem Lagerring 34 des Rotors 3 ausgestaltet und angeordnet ist. Der Statorring 71 ist stationär angeordnet, das heisst er rotiert nicht. Der Statorring 71 ist bei dem ersten Ausführungsbeispiel radial aussenliegend und beabstandet zum Lagerring 34 des Rotors 3 angeordnet, derart, dass er den Lagerring 34 umgibt. Der Statorring 71 ist als ein permanentmagnetischer Ring mit einem Innenradius SR ausgestaltet, wobei der Ring 71 in axialer Richtung A magnetisiert ist, darstellungsgemäss (Fig. 3 und Fig. 4) in axialer Richtung A nach unten. Die Magnetisierung des Statorrings 71 ist durch die Pfeile ohne Bezugszeichen (im Statorring 71) angezeigt. Der Lagerring 34 und der Statorring 71 sind also jeweils in axialer Richtung A magnetisiert, wobei die Magnetisierung des Statorrings 71 entgegengesetzt zur Magnetisierung des Lagerrings 34 gerichtet ist.

Der Statorring 71 kann als ein einstückiger permanentmagnetischer Ring ausgestaltet sein, oder segmentiert, das heisst aus einer Mehrzahl von ringsegmentförmigen Permanentmagneten zusammengesetzt sein, die in ihrer Gesamtheit den Statorring 71 bilden (siehe auch Fig. 15 und Fig. 16). Bei dem ersten Ausführungsbeispiel ist der Statorring 71 in der magnetischen Mittelebene C des magnetisch wirksamen Kerns 31 des Rotors 3 angeordnet, das heisst die geometrische Mittelebene SM des Statorrings 71, die sich senkrecht zur axialen Richtung A erstreckt, liegt in der magnetischen Mittelebene C des magnetisch wirksamen Kerns 31 des Rotors 3. Der Lagerring 34 und der Statorring 71 sind konzentrisch angeordnet, das heisst, sie haben einen gemeinsamen Mittelpunkt. Bezüglich der axialen Richtung A ist der Statorring 71 zentriert zum Lagerring 34 angeordnet.

Bei dem ersten Ausführungsbeispiel sind also der ringförmige magnetisch wirksame Kern 31, der Lagerring 34 und der Statorring 71 konzentrisch in der magnetischen Rotorebene C angeordnet, wobei der Innenradius IR des magnetisch wirksamen Kerns 31 kleiner ist als der Innenradius **LR** des Lagerrings 34 und der Innenradius LR des Lagerrings 34 kleiner ist als der Innenradius SR des Statorrings .

Der Innenradius SR des Statorrings 71 ist so bemessen, dass der Statorring 71 den Lagerring 34 mit möglichst geringem Spiel umgibt, sodass der magnetische Luftspalt zwischen dem Lagerring 34 und dem Statorring 71 in radialer Richtung möglichst gering ist. Einerseits soll der Lagerring 34 frei innerhalb des Statorrings 71 rotieren können, andererseits soll der durch den Spalt zwischen dem Lagerring 34 und dem Statorring 71 bewirkte magnetische Widerstand möglichst gering sein, um eine effiziente Flussführung des magnetischen Flusses zwischen dem Lagerring 34 und dem Statorring 71 zu ermöglichen. Die Breite des Spalts zwischen dem Lagerring 34 und dem Statorring 71 beträgt in radialer Richtung höchstens wenige Millimeter oder auch nur einen Millimeter oder noch weniger.

In axialer Richtung A weist der Statorring 71 eine Höhe HS auf, die vorzugsweise gleich gross ist wie die Höhe HL des Lagerrings 34. Es sind aber auch Ausgestaltungen möglich, bei denen die Höhe HS des Statorrings 71 kleiner oder grösser ist als die Höhe HL des Lagerrings 34.

Vorzugsweise, aber nicht notwendigerweise, haben der magnetisch wirksame Kern 31, der Lagerring 34 und der Statorring 71 jeweils eine rechteckige Querschnittsfläche senkrecht zu ihrer jeweiligen Umfangsrichtung.

Der zusätzliche Lagerstator 7 umfasst ferner einen Tragkörper 72 zum Tragen des stationären Statorrings 71. Der Tragkörper 72 bildet eine mechanisch stabile Verbindung zwischen dem Stator 2 und dem magnetisch wirksamen Statorring 71 des zusätzlichen Lagerstators 7.

Der Tragkörper 72 umfasst einen scheibenförmigen Radialteil 721, der sich vom Stator 2 in radialer Richtung nach aussen erstreckt, sowie einen ringförmigen Axialteil 722, der sich vom radial aussen liegenden Rand des Radialteils 721 in axialer Richtung A darstellungsgemäss (Fig. 3 und Fig. 4) nach oben erstreckt. Auf dem Axialteil 722 ist der Statorring 71 befestigt. An seinem radial innen liegenden Rand weist der scheibenförmige Radialteil 721 ein ringförmiges Anschlussstück 723 auf, mit welchem der Tragkörper 72 am Stator 2 fixiert ist. Dazu kann das Anschlussstück 723 beispielsweise an dem ringförmigen Rückschluss 22 des Stators 2 befestigt sein, oder auch an einem (nicht dargestellten) Statorgehäuse des Stators 2.

Wie dies Fig. 3 und Fig. 4 zeigen, erstreckt sich der Tragkörper 72 unterhalb der Spulen 61 radial nach aussen bis über den Lagerring 34 des Rotors 3 hinaus und dann in axialer Richtung nach oben, sodass der auf dem Tragkörper 72 fixierte Statorring 71 dem Lagerring 34 gegenüberliegt bzw. den Lagerring 34 umgibt. Durch den Tragkörper 72 ist der Statorring 71 mit dem Stator 2 verbunden und bezüglich des Stators 2 fixiert. Vorzugsweise ist der Tragkörper 72 einstückig ausgestaltet, das heisst das Anschlussstück 723, der Radialteil 721 und der Axialteil 722 sind als bauliche Einheit einstückig ausgestaltet.

Um den Statorring 71 magnetisch von dem Stator 2 und insbesondere von dem Rückschluss 22 und den Statorpolen 21 zu entkoppeln, besteht der Tragkörper 72 - in sinngemäss gleicher Weise wie für das Verbindungselement 35 erläutert - aus einem niederpermeablen Material, also aus einem Material, das nur eine geringe magnetische Permeabilität (magnetische Leitfähigkeit) aufweist. Das niederpermeable Material kann beispielsweise ein Kunststoff sein, oder ein paramagnetisches Metall, z. B. Aluminium oder ein Edelstahl, oder ein diamagnetisches Metall, oder auch Kombinationen dieser Materialien.

Im Betriebszustand des elektromagnetischen Drehantriebs 1 wird durch das Zusammenwirken des Lagerrings 34 und des Statorrings 71 eine zusätzliche passive magnetische Axiallagerung bzw. eine zusätzliche passive magnetische Axialstabilisierung des Rotors 3 realisiert. Hierdurch lässt sich insbesondere die Stabilisierung des Rotors 3 gegen Verkippungen ganz deutlich, beispielsweise um mindestens einen Faktor zwanzig erhöhen. Diese Erhöhung insbesondere der Verkippungssteifigkeit bedeutet, dass die gesamte passive magnetische Axiallagerung des Rotors 3 Verkippungen bewirkende Drehmomente aufnehmen bzw. kompensieren kann, die mindestens um einen Faktor zwanzig grösser sind, als vergleichbare Ausführungsformen ohne den Lagerring 34 und den Statorring 71. Dabei ist es besonders vorteilhaft, dass der Einfluss der zusätzlichen magnetischen Axiallagerung (Lagerring 34 und Statorring 71) auf die Radiallagerung des Rotors 3 durch die aktive Radiallagerung kompensiert werden kann, welche durch das Zusammenwirken des magnetisch wirksamen Kerns 31 des Rotors 3 mit den Statorpolen 21 realisiert wird.

Der elektromagnetische Drehantrieb 1 umfasst also zwei magnetische Kreise, welche durch das niederpermeable Verbindungselement 35 und den niederpermeablen Tragkörper 72 voneinander getrennt bzw. magnetisch entkoppelt sind: Der magnetisch wirksame Kern 31 wirkt magnetisch mit den Statorpolen 21 nach dem Prinzip des lagerlosen Motors zusammen, und der Lagerring 34 des Rotors 3 wirkt magnetisch mit dem Statorring 71 zusammen, wodurch eine zusätzliche passive magnetische Axialstabilisierung oder Axiallagerung realisiert wird.

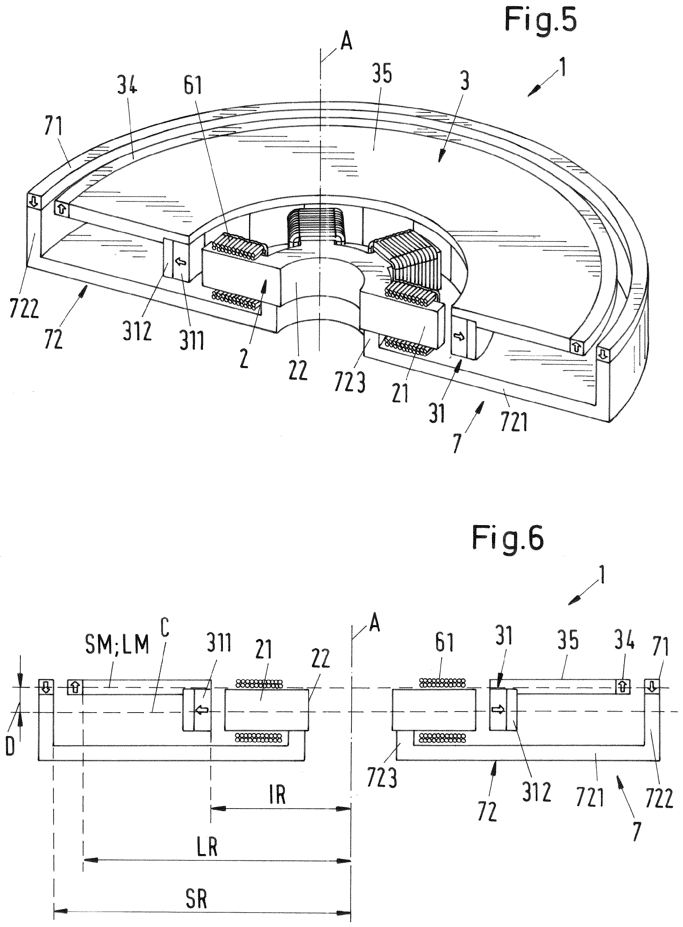

Fig. 5 zeigt in einer perspektivischen Schnittdarstellung eine Variante des ersten Ausführungsbeispiels in einer der Fig. 3 entsprechenden Darstellung. Zum besseren Verständnis zeigt Fig. 6 noch einen schematische Schnitt in axialer Richtung durch diese Variante.

Bei der in Fig. 5 und Fig. 6 dargestellten Variante ist der Lagerring 34 des Rotors 3 bezüglich der axialen Richtung A mit einem von Null verschiedenen Abstand D zu der magnetischen Mittelebene C des magnetisch wirksamen Kerns 31 des Rotors 3 angeordnet. Das heisst, der Lagerring 34 ist so angeordnet, dass die geometrische Mittelebene LM des Lagerrings 34 nicht mehr in der magnetischen Mittelebene C liegt, sondern dass die geometrische Mittelebene LM des Lagerrings 34 parallel mit dem Abstand D zu der magnetischen Mittelebene C angeordnet ist. Darstellungsgemäss (Fig. 5, Fig. 6) ist der Lagerring 34 oberhalb des ringförmigen magnetisch wirksamen Kerns 31 angeordnet. Es versteht sich, dass der Lagerring 34 in sinngemäss gleicher Weise natürlich auch darstellungsgemäss (Fig. 5, Fig. 6) unterhalb des magnetisch wirksamen Kerns 31 angeordnet sein kann.

Bei dieser Variante sind also die beiden Ringe, nämlich der magnetisch wirksame Kern 31 und der Lagerring 34 nicht mehr konzentrisch angeordnet sondern bezüglich der axialen Richtung A um den Abstand D versetzt zueinander. Dabei liegen die Mittelpunkte des Lagerrings 34 und des magnetisch wirksamen Kerns 31 auf der gleichen Achse, nämlich der Drehachse des Rotors 3, sind aber axial beabstandet zueinander. Somit ist der Lagerring 34 bezüglich der radialen Richtung zentriert zum magnetisch wirksamen Kern 31 angeordnet und bezüglich der axialen Richtung beabstandet mit dem Abstand D zum magnetisch wirksamen Kern 31 angeordnet.

Das Verbindungselement 35 ist zwischen dem Lagerring 34 und dem magnetisch wirksamen Kern 31 angeordnet und verbindet den Lagerring 34 mit dem magnetisch wirksamen Kern 31. Dabei kann das Verbindungselement 35 optional und wie in Fig.4 sowie Fig. 5 dargestellt den magnetisch wirksamen Kern 31 übergreifen, das heisst, das Verbindungselement 35 erstreckt sich in radialer Richtung bis an den radial innenliegenden Rand des magnetisch wirksamen Kerns 31.

Der Statorring 71 des zusätzlichen Lagerstators 7 ist konzentrisch mit dem Lagerring 34 angeordnet, sodass die geometrische Mittelebene SM des Statorrings 71 in der geometrischen Mittelebene LM des Lagerrings 34 liegt. Folglich ist auch der Statorring 71 bezüglich der axialen Richtung A mit dem Abstand D von der magnetischen Mittelebene C angeordnet. Der Statorring 71 umgibt den Lagerring 34, sodass der Statorring 71 und der Lagerring 34 bezüglich der radialen Richtung miteinander fluchten.

Um die destabilisierende Wirkung der zusätzlichen Axiallagerung (Lagerring 34 und Statorring 71), auf die zusätzliche Stabilisierung gegen Verkippungen, auf einen praxistauglichen Wert zu beschränken, sind solche Ausführungsformen bevorzugt, bei welchen der Abstand D zwischen dem Lagerring 34, genauer gesagt seiner geometrischen Mittelebene LM, und der magnetischen Mittelebene C höchstens ein Viertel und besonders bevorzugt höchstens ein Fünftel des Innenradius LR des Lagerrings 34 beträgt. Vorzugsweise wird also die geometrische Bedingung erfüllt, dass D ≤ LR/4 und besonders bevorzugt, dass D ≤ LR/5 ist.

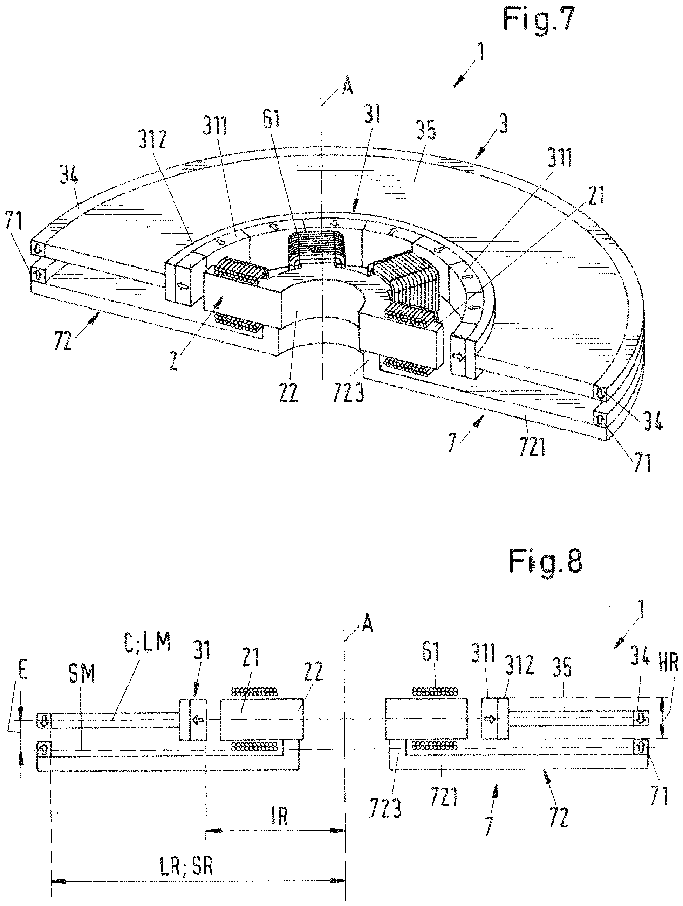

Fig. 7 zeigt in einer perspektivischen Schnittdarstellung ein zweites Ausführungsbeispiel eines erfindungsgemässen Drehantriebs 1 in einer Darstellung, die derjenigen in Fig. 3 entspricht. Zum besseren Verständnis zeigt Fig. 8 noch eine schematische Darstellung eines Schnitts in axialer Richtung A durch dieses zweite Ausführungsbeispiel. Im Folgenden wird nur auf die Unterschiede zu dem ersten Ausführungsbeispiel eingegangen. Gleiche Teile oder von der Funktion her gleichwertige Teile des zweiten Ausführungsbeispiels sind mit den gleichen Bezugszeichen bezeichnet wie bei dem ersten Ausführungsbeispiel bzw. seinen Varianten. Insbesondere haben die Bezugszeichen die gleiche Bedeutung wie sie bereits im Zusammenhang mit dem ersten Ausführungsbeispielen erläutert sind. Es versteht sich, dass alle vorangehenden Erläuterungen des ersten Ausführungsbeispiels und seiner Varianten in gleicher Weise oder in sinngemäss gleicher Weise auch für das zweite Ausführungsbeispiel gelten.

Das zweite Ausführungsbeispiel unterscheidet sich von dem ersten Ausführungsbeispiel dadurch, dass bei dem zweiten Ausführungsbeispiel der Statorring 71 des zusätzlichen Lagerstators 7 bezüglich der axialen Richtung A beabstandet zu dem Lagerring 34 des Rotors 3 angeordnet ist. Das heisst, der Statorring 71 ist so angeordnet, dass die geometrische Mittelebene SM des Statorrings 71 nicht mehr in der geometrischen Mittelebene LM des Lagerrings 34 liegt, sondern dass die geometrische Mittelebene SM des Statorrings 71 parallel mit einem von Null verschiedenen Abstand E zu der geometrischen Mittelebene LM des Lagerrings 34 angeordnet ist. Darstellungsgemäss (Fig. 7, Fig. 8) ist der Statorring 71 unterhalb des Lagerrings 34 angeordnet. Es versteht sich, dass der Statorring 71 in sinngemäss gleicher Weise auch darstellungsgemäss (Fig. 7, Fig. 8) oberhalb des Lagerrings 34 angeordnet sein kann.

Der Statorring 71 und der Lagerring 34 sind nicht mehr konzentrisch angeordnet, sondern bezüglich der axialen Richtung A um den Abstand E versetzt zueinander. Dabei liegen die Mittelpunkte des Lagerrings 34 und Statorrings 71 auf der gleichen Achse, nämlich der Drehachse des Rotors 3, sind aber axial beabstandet zueinander. Besonders bevorzugt weist der Statorring 71 einen Innenradius SR auf, der gleich gross ist wie der Innenradius LR des Lagerrings 34. Dabei sind der Lagerring 34 und der Statorring 71 bezüglich der axialen Richtung A miteinander fluchtend angeordnet, sodass sich der Lagerring 34 und der Statorring 71 in axialer Richtung A gegenüberliegend bzw. übereinander angeordnet sind.

Bei der in Fig. 7 und Fig. 8 dargestellten Ausführungsform ist der Lagerring 34 in der magnetischen Mittelebene C angeordnet, das heisst konzentrisch mit dem magnetisch wirksamen Kern 31. Bei dieser Anordnung ist der Statorring 71 bezüglich der axialen Richtung A mit dem von Null verschiedenen Abstand E zu der magnetischen Mittelebene C angeordnet, das heisst die geometrische Mittelebene SM des Statorrings 71 liegt parallel zur magnetischen Mittelebene C und hat von dieser den Abstand E.

Da der Statorring 71 bei der in Fig. 7 und Fig. 8 dargestellten Ausführungsform unterhalb des Lagerrings 34 angeordnet ist, kann optional bei dem Tragkörper 72 auf den Axialteil 722 verzichtet werden.

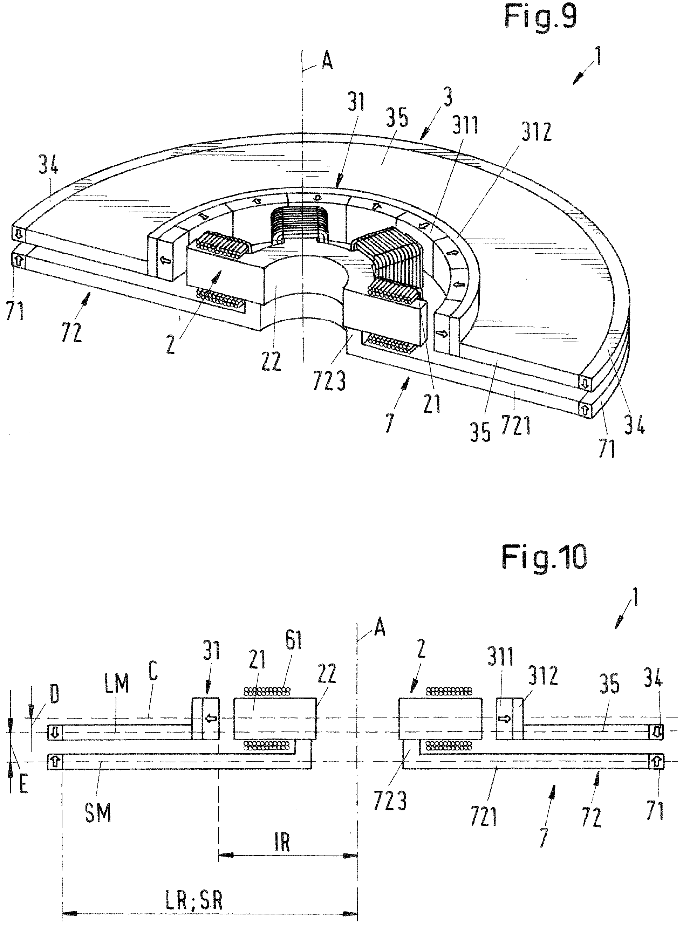

Fig. 9 zeigt in einer perspektivischen Schnittdarstellung eine Variante des zweiten Ausführungsbeispiels in einer der Fig. 7 entsprechenden Darstellung. Zum besseren Verständnis zeigt Fig. 10 noch einen schematischen Schnitt in axialer Richtung durch diese Variante.

Bei der in Fig. 9 und Fig. 10 dargestellten Variante des zweiten Ausführungsbeispiels ist der Lagerring 34 des Rotors 3 bezüglich der axialen Richtung A mit dem von Null verschiedenen Abstand D zu der magnetischen Mittelebene C des magnetisch wirksamen Kerns 31 des Rotors 3 angeordnet. Das heisst, der Lagerring 34 ist so angeordnet, dass die geometrische Mittelebene LM des Lagerrings 34 nicht mehr in der magnetischen Mittelebene C liegt, sondern dass die geometrische Mittelebene LM des Lagerrings 34 parallel mit dem Abstand D zu der magnetischen Mittelebene C angeordnet ist. Darstellungsgemäss (Fig. 9, Fig. 10) ist der Lagerring 34 unterhalb des ringförmigen magnetisch wirksamen Kerns 31 angeordnet. Es versteht sich, dass der Lagerring 34 in sinngemäss gleicher Weise natürlich auch darstellungsgemäss (Fig. 9, Fig. 10) oberhalb des magnetisch wirksamen Kerns 31 angeordnet sein kann, beispielsweise in sinngemäss entsprechender Weise wie dies im Zusammenhang mit Fig. 5 und Fig. 6 erläutert wurde.

Bei dieser Variante sind also die beiden Ringe, nämlich der magnetisch wirksame Kern 31 und der Lagerring 34 nicht mehr konzentrisch angeordnet, sondern bezüglich der axialen Richtung A um den Abstand D versetzt zueinander. Dabei liegen die Mittelpunkte des Lagerrings 34 und des magnetisch wirksamen Kerns 31 auf der gleichen Achse, nämlich der Drehachse des Rotors 3, sind aber axial beabstandet zueinander. Somit ist der Lagerring 34 bezüglich der radialen Richtung zentriert zum magnetisch wirksamen Kern 31 angeordnet und bezüglich der axialen Richtung beabstandet mit dem Abstand D zum magnetisch wirksamen Kern 31 angeordnet.

Der Statorring 71 des zusätzlichen Lagerstators 7, der bezüglich der axialen Richtung A unterhalb des Lagerrings 34 angeordnet ist, weist bei dieser Variante einen Abstand D + E von der magnetischen Mittelebene C auf. Die drei Ringe, nämlich der magnetisch wirksame Kern 31, der Lagerring 34 und der Statorring 71 sind jeweils auf unterschiedlichen Positionen bezüglich der axialen Richtung A und parallel zueinander angeordnet. Ihre Mittelpunkte liegen alle auf der gleichen Achse, nämlich der Drehachse des Rotors 3 (wenn dieser bezüglich des Stators zentriert und unverkippt ist). Die geometrische Mittelebene SM des Statorrings 71 liegt mit dem Abstand E unterhalb der geometrischen Mittelebene LM des Lagerrings 34, und diese liegt mit dem Abstand D unterhalb der magnetischen Mittelebene C.

Um die destabilisierende Wirkung der zusätzlichen Axiallagerung (Lagerring 34 und Statorring 71), auf die zusätzliche Stabilisierung gegen Verkippungen, auf einen praxistauglichen Wert zu beschränken, sind solche Ausführungsformen bevorzugt, bei welchen der Abstand D zwischen dem Lagerring 34, genauer gesagt seiner geometrischen Mittelebene LM, und der magnetischen Mittelebene C höchstens ein Viertel und besonders bevorzugt höchstens ein Fünftel des Innenradius LR des Lagerrings 34 beträgt. Vorzugsweise wird also die geometrische Bedingung erfüllt, dass D ≤ LR/4 und besonders bevorzugt, dass D ≤ LR/5 ist.

Als eine optionale Ausgestaltung ist bei der in Fig. 9 und Fig. 10 dargestellten Variante der Statorring 71 radial aussenliegend an der radial äusseren Begrenzungsfläche des Radialteils 721 des Tragkörpers 72 befestigt.

Es versteht sich, dass die im Zusammenhang mit dem ersten Ausführungsbeispiel und seiner Variante beschriebenen Massnahmen und Ausgestaltungen sinngemäss mit den Massnahmen und Ausgestaltungen kombiniert werden können, die im Zusammenhang mit dem zweiten Ausführungsbeispiel und seiner Variante beschrieben sind.

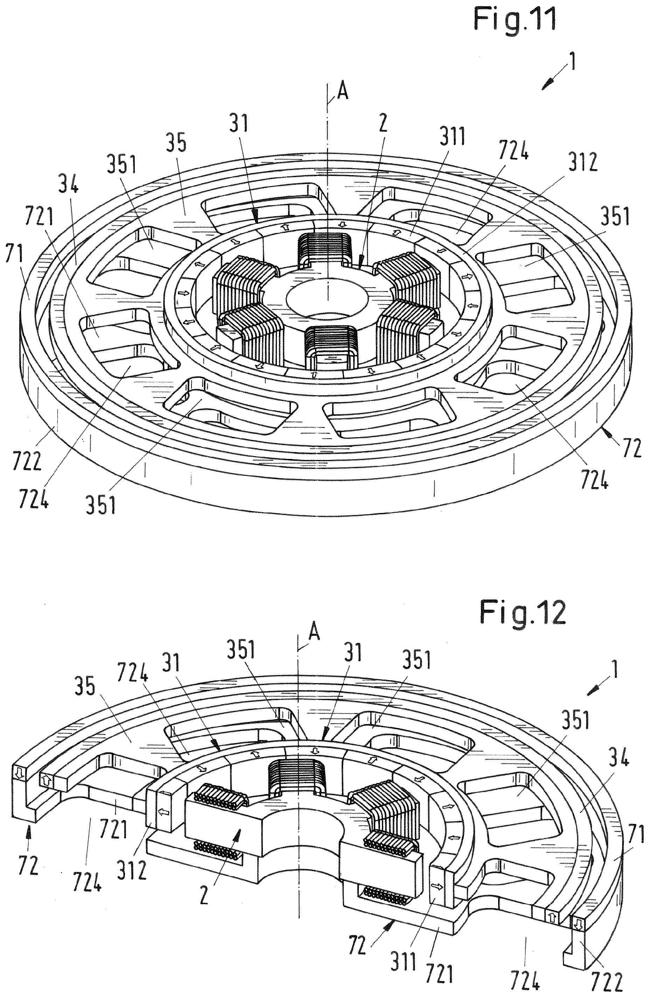

Im Folgenden werden nun anhand der Fig. 11 - Fig. 14 Varianten für die Ausgestaltung des Verbindungselements 35 und/oder für die Ausgestaltung des Tragkörpers 72 erläutert. Es versteht sich, dass diese Varianten sowohl für das erste Ausführungsbeispiel und seine Variante als auch für das zweite Ausführungsbeispiel und seine Variante verwendet werden können.

Fig. 11 zeigt eine erste Variante für die Ausgestaltung des Verbindungselements 35 und/oder für die Ausgestaltung des Tragkörpers 72 in einer perspektivischen Darstellung. Fig. 12 zeigt diese erste Variante in einer perspektivischen Schnittdarstellung bei einem Schnitt in axialer Richtung A.

Bei dieser ersten Variante ist das Verbindungselement 35, das bezüglich der radialen Richtung zwischen dem magnetisch wirksamen Kern 31 und dem Lagerring 34 des Rotors 3 angeordnet ist, nicht als eine Vollscheibe ausgestaltet, sondern weist eine Mehrzahl von Ausnehmungen 351 auf, von denen sich jede bezüglich der axialen Richtung A ganz durch das Verbindungselement 35 hindurch erstreckt. Mit beispielhaftem Charakter sind hier acht im Wesentlichen identische Ausnehmungen 351 vorgesehen. Die Ausnehmungen 351 sind äquidistant bezüglich der Umfangsrichtung des Verbindungselements 35 angeordnet. Jede Ausnehmung 351 hat die Form eines Ringsegments, wobei der gemeinsame Mittelpunkt aller Ringsegmente mit dem geometrischen Mittelpunkt des scheibenförmigen Verbindungselements 35 übereinstimmt.

Durch die Ausnehmungen 351 lassen sich der Materialbedarf und damit auch das Gewicht des Verbindungselements 35 reduzieren. Die Ausnehmungen 351 sind so ausgestaltet, bemessen und angeordnet, dass das dazwischenliegende Material des Verbindungselements 35 noch eine ausreichend stabile mechanische Verbindung bildet, um den Lagerring 34 am magnetisch wirksamen Kern 31 zu befestigen.

In analoger Weise ist auch der Tragkörper 72, genauer gesagt der Radialteil 721 des Tragkörpers 72, mit einer Mehrzahl von zweiten Ausnehmungen 724 versehen, von denen sich jede bezüglich der axialen Richtung A ganz durch das Radialteil 721 des Tragkörpers 72 hindurch erstreckt. Mit beispielhaftem Charakter sind hier acht im Wesentlichen identische zweite Ausnehmungen 724 vorgesehen. Die zweiten Ausnehmungen 724 sind äquidistant bezüglich der Umfangsrichtung des Radialteils 721 angeordnet. Jede zweite Ausnehmung 724 hat die Form eines Ringsegments, wobei der gemeinsame Mittelpunkt aller Ringsegmente mit dem geometrischen Mittelpunkt des scheibenförmigen Radialteils 721 des Tragkörpers 72 übereinstimmt.

Durch die zweiten Ausnehmungen 724 lassen sich der Materialbedarf und damit auch das Gewicht des Tragkörpers 72 reduzieren. Die zweiten Ausnehmungen 724 sind so ausgestaltet, bemessen und angeordnet, dass das dazwischenliegende Material des Radialteils 721 noch eine ausreichend stabile mechanische Verbindung bildet, um den Statorring 71 am Stator 2 zu befestigen.

Es sind natürlich auch solche Ausführungsformen möglich, bei denen nur die Ausnehmungen 351 im Verbindungselement 35 vorgesehen sind, oder nur die zweiten Ausnehmungen 724 im Tragkörper 72.

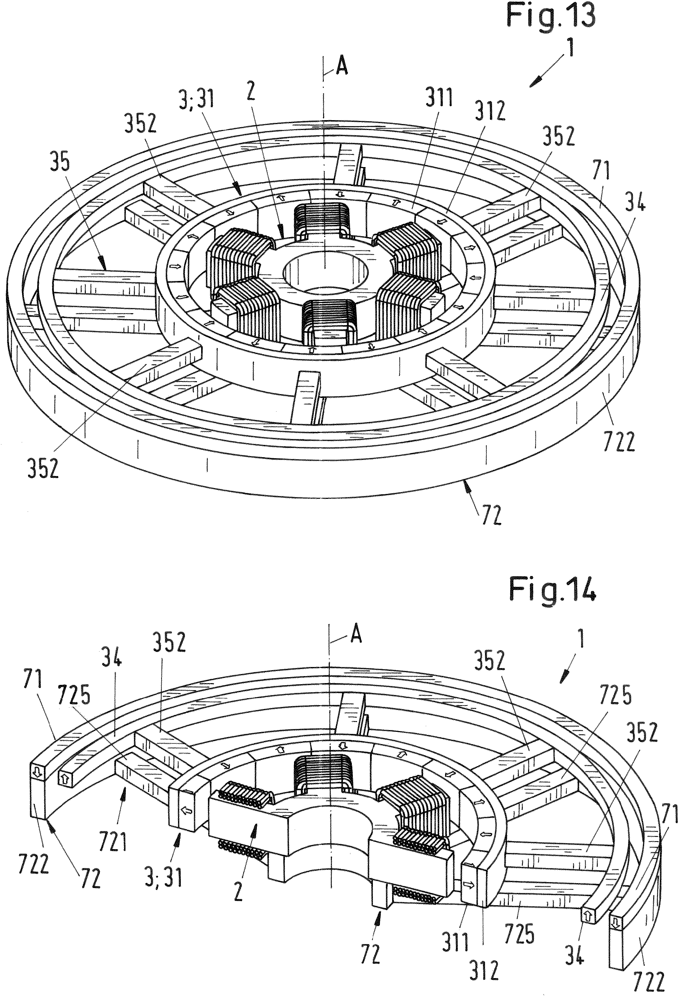

Fig. 13 zeigt eine zweite Variante für die Ausgestaltung des Verbindungselements 35 und/oder für die Ausgestaltung des Tragkörpers 72 in einer perspektivischen Darstellung. Fig. 14 zeigt diese zweite Variante in einer perspektivischen Schnittdarstellung bei einem Schnitt in axialer Richtung A.

Bei dieser zweiten Variante weist das Verbindungselement 35 eine Mehrzahl von Speichen 352 auf, von denen sich jede in radialer Richtung zwischen dem magnetisch wirksamen Kern 31 des Rotors 3 - oder optional einer nicht dargestellten Ummantelung des magnetisch wirksamen Kerns 31 - und dem Lagerring 34 des Rotors 3 - oder optional einer nicht dargestellten Ummantelung des Lagerrings 34 - erstreckt. Jede Speiche 352 verbindet den magnetisch wirksamen Kern 31 mit dem Lagerring 34.

Mit beispielhaftem Charakter sind hier acht im Wesentlichen identische Speichen 352 vorgesehen. Die Speichen 352 sind äquidistant bezüglich der Umfangsrichtung des Verbindungselements 35 angeordnet. Die Speichen 352 sind so ausgestaltet, bemessen und angeordnet, dass sie eine ausreichend stabile mechanische Verbindung bilden, um den Lagerring 34 am magnetisch wirksamen Kern 31 zu befestigen.

In analoger Weise ist auch der Tragkörper 72, genauer gesagt der Radialteil 721 des Tragkörpers 72, mit einer Mehrzahl von zweiten Speichen 725 ausgestaltet, von denen sich jede in radialer Richtung zwischen dem Stator 2 - oder optional einem nicht dargestellten Statorgehäuse - und dem ringförmigen Axialteil 722 des Tragkörpers 72 erstreckt. Jede zweite Speiche 725 verbindet den Stator 2 - bzw. ein nicht dargestelltes Statorgehäuse - mit dem Axialteil 722 des Tragkörpers72.

Mit beispielhaftem Charakter sind hier acht im Wesentlichen identische zweite Speichen 725 vorgesehen. Die zweiten Speichen 725 sind äquidistant bezüglich der Umfangsrichtung des Tragkörpers 72 angeordnet. Die zweiten Speichen 725 sind so ausgestaltet, bemessen und angeordnet, dass sie eine ausreichend stabile mechanische Verbindung bilden, um den Statorring 71 am Stator 2 zu befestigen.

Es sind natürlich auch solche Ausführungsformen möglich, bei denen nur die Speichen 352 im Verbindungselement 35 vorgesehen sind, oder nur die zweiten Speichen 725 im Tragkörper 72.

In den Fig. 15 und Fig. 16 ist eine Variante für die Ausgestaltung des Lagerrings 34 und/oder für die Ausgestaltung des Statorrings 71 erläutert. Es versteht sich, dass diese Variante sowohl für das erste Ausführungsbeispiel und seine Variante als auch für das zweite Ausführungsbeispiel und seine Variante verwendet werden kann.

Gemäss dieser Variante sind der Lagerring 34 und der Statorring 71 jeweils segmentiert ausgestaltet. Fig. 15 zeigt diese Variante in einer perspektivischen Darstellung am Beispiel einer Ausführungsform des Drehantriebs 1, welche ansonsten der in Fig. 3 dargestellten Ausführungsform entspricht. Zum besseren Verständnis zeigt Fig. 16 diese Variante aus Fig. 15 noch in einer perspektivischen Schnittdarstellung.

Sowohl der Lagerring 34 als auch der Statorring 71 bestehen jeweils aus einem permanentmagnetischen Material und sind jeweils segmentiert mit einer Mehrzahl von Permanentmagneten 341 bzw. 711 ausgestaltet.

Jeder der Permanentmagnete 341 des Lagerrings 34 ist jeweils als ein Ringsegment ausgestaltet. Alle Permanentmagnete 341 sind in der gleichen Richtung magnetisiert, hier in axialer Richtung A nach oben. Dies ist in Fig. 16 durch die Pfeile ohne Bezugszeichen im Lagerring 34 angedeutet, welche die Richtung der Magnetisierung anzeigen. Mit beispielhaftem Charakter besteht der Lagerring 34 aus vierundzwanzig identischen einzelnen Permanentmagneten 341, von denen jeder in Form eines Ringsegments ausgestaltet ist. Die Permanentmagnete 341 sind in Umfangsrichtung angeordnet, wobei zwei benachbarte Permanentmagnete 341 jeweils direkt aneinandergrenzen, sodass sich die Gesamtheit der Permanentmagnete 341 zu dem permanentmagnetischen Lagerring 34 ergänzen. Jeder der Permanentmagnete 711 des Statorrings 71 ist jeweils als ein Ringsegment ausgestaltet. Alle Permanentmagnete 711 sind in der gleichen Richtung magnetisiert, hier in axialer Richtung A nach unten. Dies ist in Fig. 16 durch die Pfeile ohne Bezugszeichen im Statorring 71 angedeutet, welche die Richtung der Magnetisierung anzeigen. Mit beispielhaftem Charakter besteht der Statorring 71 aus vierundzwanzig identischen einzelnen Permanentmagneten 711, von denen jeder in Form eines Ringsegments ausgestaltet ist. Die Permanentmagnete 711 sind in Umfangsrichtung angeordnet, wobei zwei benachbarte Permanentmagnete 711 jeweils direkt aneinandergrenzen, sodass sich die Gesamtheit der Permanentmagnete 711 zu dem permanentmagnetischen Statorring 71 ergänzen.

Die segmentierte Ausgestaltung des Lagerrings 34 bzw. des Statorrings 71 ist bevorzugt, weil sie eine einfachere Herstellung ermöglicht, aber es ist natürlich auch möglich, den Lagerring 34 und/oder den Statorring 71 jeweils als einen einstückigen Ring auszugestalten.

Wenn der Lagerring 34 und/oder der Statorring 71 permanentmagnetisch ausgestaltet ist, ist es nicht notwendig, dass der jeweilige Ring 34 bzw. 71 vollständig aus einem permanentmagnetischen Material besteht oder nur Permanentmagnete umfasst. Es sind auch solche Ausführungsformen möglich, bei welchen ein permanentmagnetischer Lagerring 34 und/oder ein permanentmagnetischer Statorring 71 jeweils eine Mehrzahl von Permanentmagneten umfassen, zwischen denen ferromagnetische Verbindungsstücke angeordnet sind. Bei einer segmentierten Ausgestaltung des jeweiligen Rings 34 bzw. 71 können dann mehrere permanentmagnetische Ringsegmente vorgesehen sein, welche durch ferromagnetische Ringsegmente miteinander verbunden sind.

Wie bereits erwähnt, ist es bevorzugt, aber nicht notwendig, dass sowohl der Lagerring 34 und der Statorring 71 jeweils als permanentmagnetische Ringe ausgestaltet sind. Es sind auch Ausführungsformen möglich, bei denen entweder nur der Lagerring 34 oder nur der Statorring 71 permanentmagnetisch ausgestaltet ist. Wenn nur der Lagerring 34 permanentmagnetisch ist, dann ist der Statorring 71 ferromagnetisch ausgestaltet, beispielsweise als Eisenring oder Ring aus einem anderen ferromagnetischen Material. Wenn nur der Statorring 71 permanentmagnetisch ist, dann ist der Lagerring 34 ferromagnetisch ausgestaltet, beispielsweise als Eisenring oder Ring aus einem anderen ferromagnetischen Material.

Falls der Lagerring 34 oder der Statorring 71 ferromagnetisch ausgestaltet ist, so kann dieser Ring 34 bzw. 71 als einstückiger Ring ausgestaltet sein oder als segmentierter Ring in sinngemäss gleicher Weise wie vorangehend beschrieben.

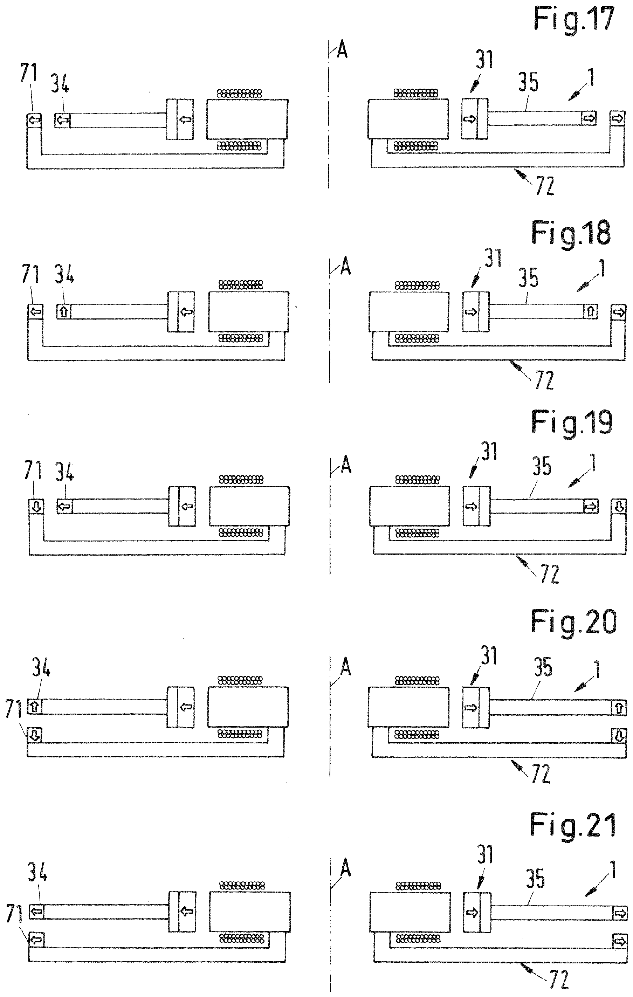

Für die bevorzugte Ausgestaltung, bei welcher sowohl der Lagerring 34 als auch der Statorring 71 jeweils permanentmagnetisch ausgestaltet sind, ist in den Fig. 3 - Fig. 16 immer die gleiche Form der Magnetisierung des Statorrings 71 bzw. des Lagerrings 34 dargestellt, nämlich dass der Lagerring 34 und der Statorring 71 jeweils in axialer Richtung A magnetisiert sind, wobei die Magnetisierung des Statorrings 71 (darstellungsgemäss nach unten) entgegengesetzt zur Magnetisierung des Lagerrings 34 (darstellungsgemäss nach oben) gerichtet ist. Neben dieser bevorzugten Ausführungsform gibt es hinsichtlich der Magnetisierung des Statorrings 71 und des Lagerrings 34 auch andere bevorzugte Ausführungsformen. Im Folgenden werden anhand der Fig. 17 - Fig. 21 verschiedene Varianten für die Magnetisierung des Lagerrings 34 und des Statorrings 71 erläutert. Es versteht sich, dass diese Varianten sowohl für das erste Ausführungsbeispiel und seine Variante als auch für das zweite Ausführungsbeispiel und seine Variante verwendet werden können.

Die Fig. 17 - Fig. 21 zeigen jeweils in einer schematischen Schnittdarstellung eine Ausführungsform des Drehantriebs 1. In jeder der Fig. 17 - Fig. 21 zeigen die Pfeile ohne Bezugszeichen im Lagerring 34 die Richtung der Magnetisierung des Lagerrings 34 an, und die Pfeile ohne Bezugszeichen im Statorring 71 zeigen die Richtung der Magnetisierung des Statorrings 71 an.

Fig. 17 zeigt anhand des ersten Ausführungsbeispiels eine Variante, bei welcher der Statorring 71 und der Lagerring 34 jeweils in radialer Richtung magnetisiert sind, wobei die Magnetisierung des Statorrings 71 und die Magnetisierung des Lagerrings 34 gleich gerichtet sind, nämlich jeweils radial nach aussen.

Fig. 18 zeigt anhand des ersten Ausführungsbeispiels eine Variante, bei welcher der Statorring 71 in radialer Richtung magnetisiert ist und der Lagerring 34 in axialer Richtung A magnetisiert ist. Die Magnetisierung des Statorrings 71 ist radial nach aussen gerichtet, und die Magnetisierung des Lagerrings 34 ist in axialer Richtung A nach oben gerichtet.

Fig. 19 zeigt anhand des ersten Ausführungsbeispiels eine Variante, bei welcher der Statorring 71 in axialer Richtung A magnetisiert ist und der Lagerring 34 in radialer Richtung magnetisiert ist. Die Magnetisierung des Statorrings 71 ist in axialer Richtung A nach unten gerichtet, und die Magnetisierung des Lagerrings 34 ist radial nach aussen gerichtet.

Fig. 20 zeigt anhand des zweiten Ausführungsbeispiels eine Variante, bei welcher der Statorring 71 und der Lagerring 34 jeweils in axialer Richtung magnetisiert sind, wobei die Magnetisierung des Statorrings 71 und die Magnetisierung des Lagerrings 34 entgegengesetzt gerichtet sind. Die Magnetisierung des Statorrings 71 ist in axialer Richtung A nach unten gerichtet, und die Magnetisierung des Lagerrings 34 ist in axialer Richtung A nach oben gerichtet.

Fig. 21 zeigt anhand des zweiten Ausführungsbeispiels eine Variante, bei welcher der Statorring 71 und der Lagerring 34 jeweils in radialer Richtung magnetisiert sind, wobei die Magnetisierung des Statorrings 71 und die Magnetisierung des Lagerrings 34 gleich gerichtet sind, nämlich jeweils radial nach aussen.

Durch die Erfindung wird ferner eine Rotationsvorrichtung zur Behandlung einer Oberfläche eines scheibenförmigen Körpers vorgeschlagen, mit welcher der Körper zur Behandlung rotierbar ist, die dadurch gekennzeichnet ist, dass die Rotationsvorrichtung einen elektromagnetischen Drehantrieb 1 umfasst, der erfindungsgemäss ausgestaltet ist, wobei der Rotor 3 eine Halterung für den scheibenförmigen Körper umfasst.

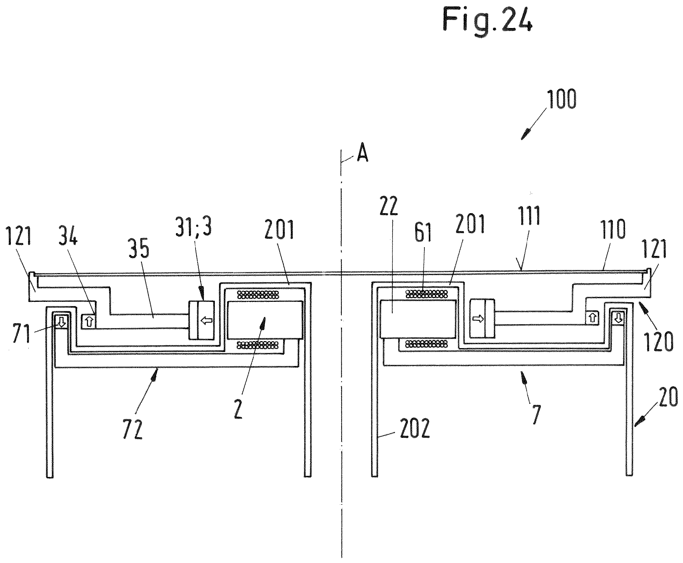

Fig. 22 zeigt in einer perspektivischen Darstellung ein Ausführungsbeispiel einer erfindungsgemässen Rotationsvorrichtung zur Behandlung einer Oberfläche eines scheibenförmigen Körpers. Die Rotationsvorrichtung ist gesamthaft mit dem Bezugszeichen 100 bezeichnet und der scheibenförmige Körper mit dem Bezugszeichen 110. Zum besseren Verständnis zeigt Fig. 23 noch eine perspektivische Schnittdarstellung der Rotationsvorrichtung 100 in einem Schnitt in axialer Richtung A und Fig. 24 eine schematische Schnittdarstellung der Rotationsvorrichtung 100 in einem Schnitt entlang der axialen Richtung A.

Im Folgenden wird mit beispielhaften Charakter auf den für die Praxis wichtigen Anwendungsfall aus der Halbleiterindustrie Bezug genommen, dass der zu behandelnde Körper 110 ein Wafer 110 für die Herstellung elektronischer Bauteile ist, also ein dünner, scheibenförmiger Körper. Die Rotationsvorrichtung 100 kann zum Behandeln der Oberfläche 111 des Wafers 110 verwendet werden, zum Beispiel, um die Oberfläche 111 mit Fluiden wie Suspensionen in kontrollierter Weise zu beaufschlagen. Als Beispiele seien hier chemisch-mechanische Polierprozesse (CMP) mittels Slurry, das Reinigen und/oder Ätzen von Wafern 110, das Auftragen von Fotolack oder das Entfernen von Fotolack mit Lösungsmitteln genannt. Neben diesen Nassprozessen, bei welchen der Wafer 110 mit einem Fluid beaufschlagt wird, eignet sich die Rotationsvorrichtung 100 auch für Trockenprozesse. Beispiele für solche Trockenprozesse, bei denen der Wafer 110 rotiert wird, sind: Plasmaätzen, schnelle thermische Bearbeitung (RTP: rapid thermal processing), Atomlagenabscheidung (ALD: atomic layer deposition), chemische Gasphasenabscheidung (CVD: chemical vapor deposition), oder physikalische Gasphasenabscheidung (PVD: physical vapor deposition).

Bei solchen Prozessen werden typischerweise die Wafer 110 in einer Prozesskammer 20 in schnelle Rotation versetzt und dann zur Behandlung mit dem jeweiligen Fluid bzw. mit der jeweiligen Strahlung, bzw. mit einem Plasma bzw. mit den abzuscheidenden Substanzen beaufschlagt. Die erfindungsgemässe Rotationsvorrichtung 100 eignet sich insbesondere auch für solche Prozesse, bei denen die Prozesskammer 20 evakuiert werden muss, und speziell auch für Prozesse, die im Hochvakuum durchgeführt werden.

Typischerweise sind bei allen diesen Prozessen der Stator 2 und der zusätzliche Lagerstator 7 ausserhalb der Prozesskammer 20 angeordnet, während der Rotor 3 im Inneren der Prozesskammer 20 angeordnet ist.

Bei dem in den Fig. 22 - Fig. 24 dargestellten Ausführungsbeispiel umfasst die Rotationsvorrichtung 100 den elektromagnetischen Drehantrieb 1, der hier gemäss dem ersten Ausführungsbeispiel (Fig. 3) ausgestaltet ist. Ferner ist eine Prozesskammer 20 vorgesehen, von welcher in den Fig. 22 - Fig. 27 jeweils nur diejenigen Bereiche der Prozesskammerwand dargestellt sind, welche den Stator 2 vom Rotor 3 trennen. Es versteht sich, dass die gesamte Prozesskammer 20 derart ausgestaltet ist, dass sich der Rotor 3 mit dem Wafer 110 vollkommen innerhalb der verschliessbaren Prozesskammer 20 befindet. Der Stator 2 und der zusätzliche Lagerstator 7 sind ausserhalb der Prozesskammer 20 angeordnet. Wie dies am besten in Fig. 23 und Fig. 24 zu erkennen ist, ist die Prozesskammer 20 so ausgestaltet, dass sie sich zwischen dem Rotor 3 einerseits und dem Stator 2 sowie dem zusätzlichen Lagerstator 7 andererseits erstreckt, das heisst der Stator 2 und der zusätzliche Lagerstator 7 sind ausserhalb der Prozesskammer 20 angeordnet, während der Rotor 3 mit dem Wafer 110 innerhalb der Prozesskammer 20 angeordnet ist. Dazu umfasst die Prozesskammer 20 einen Wandungsteil 201 (Fig. 24) und einen zentral angeordneten hohlzylindrischen Teil 202, welcher innerhalb des ringförmigen Rückschlusses 22 des Stators 2 angeordnet ist. Von dem hohlzylindrischen Teil 202 erstreckt sich der Wandungsteil 201 radial nach aussen, verläuft dabei zunächst oberhalb der Spulen 61 des Stators 2, dann unterhalb des Rotors 3 entlang des magnetisch wirksamen Kerns 31, des Verbindungselements 35 und des Lagerrings 34, und anschliessend oberhalb des Statorrings 71 des zusätzlichen Lagerstators 7.

Diese Ausgestaltung hat den Vorteil, dass der Stator 2 und der zusätzliche Lagerstator 7 ausserhalb der Prozesskammer 20 angeordnet werden kann, in welcher der Wafer 110 behandelt wird, während der Rotor 3 mit dem Wafer 110 innerhalb der Prozesskammer 20 angeordnet werden kann. Dabei ermöglicht der hohlzylindrische Teil 202 der Prozesskammer 20 einen Zugang in die Prozesskammer 20, durch welchen beispielsweise Fluide aus der Prozesskammer 20 abgeführt werden können oder in die Prozesskammer 20 eingebracht werden können. Ferner kann der hohlzylindrische Teil 202 ganz allgemein als Zugang in die Prozesskammer 20 verwendet werden, beispielsweise für elektrische Versorgungs- oder Signalleitungen, welche an Heizungen oder Plasmaquellen oder Strahlungsquellen oder Sensoren, usw. angeschlossen werden. Auch kann der hohlzylindrische Teil 202 für das Zu- und Abführen einer Kühlflüssigkeit in bzw. aus der Prozesskammer 20 verwendet werden.

Der Rotor 3 umfasst eine Halterung 120, um den Wafer 110 auf dem Rotor 3 zu halten oder zu fixieren. Die Halterung 120 umfasst eine Mehrzahl von Haltearmen 121, die in Umfangsrichtung gesehen äquidistant über den Rotor 3 verteilt sind. Bei dem hier beschriebenen Ausführungsbeispiel sind acht im Wesentlichen identische Haltearme 121 vorgesehen. Jeder Haltearm 121 ist auf dem Verbindungselement 35 des Rotors 3 angeordnet und an dem Verbindungselement 35 fixiert, sodass jeder Haltearm 121 drehfest mit dem Verbindungselement 35 und damit auch drehfest mit dem Rotor 3 verbunden ist. Es ist auch möglich, dass alle Haltearme 121 integraler Bestandteil des Verbindungselements 35 sind, dass also das Verbindungselement 35 mit allen Haltearmen 121 einstückig ausgestaltet ist.

Jeder Haltearm 121 erstreckt sich jeweils von dem Verbindungselement 35 und oberhalb des Lagerrings 34 des Rotors 3 radial nach aussen. Das radial aussenliegende Ende jedes Haltearms 121 ist zur Aufnahme des Wafers 110 ausgestaltet. Dazu kann das radial aussenliegende Ende jedes Haltearms 121 jeweils einen Anschlag oder eine Ausnehmung oder einen anders ausgestalteten Haltemechanismus für den Wafer 110 aufweisen, sodass der Wafer 110 durch die Gesamtheit der Haltearme 121 auf dem Rotor 3 gehalten werden kann, bzw. auf dem Rotor 3 fixierbar ist. Die radial aussenliegenden Enden der Haltearme 121 liegen alle auf einem Kreis, dessen Durchmesser dem Durchmesser DK des Wafers 110 entsprechen.

Zur Behandlung des Wafers 110 bzw. seiner Oberfläche 111 wird der Wafer 110 in die Halterung 120 eingelegt und dann mit dem Rotor 3 rotiert.

Das in den Fig. 22 - Fig. 24 dargestellte Ausführungsbeispiel der Rotationsvorrichtung 100 ist insbesondere für die Behandlung von grossen Wafern 110 geeignet, deren Durchmesser DK grösser ist als der Aussendurchmesser des Statorrings 71 oder des Lagerrings 34.

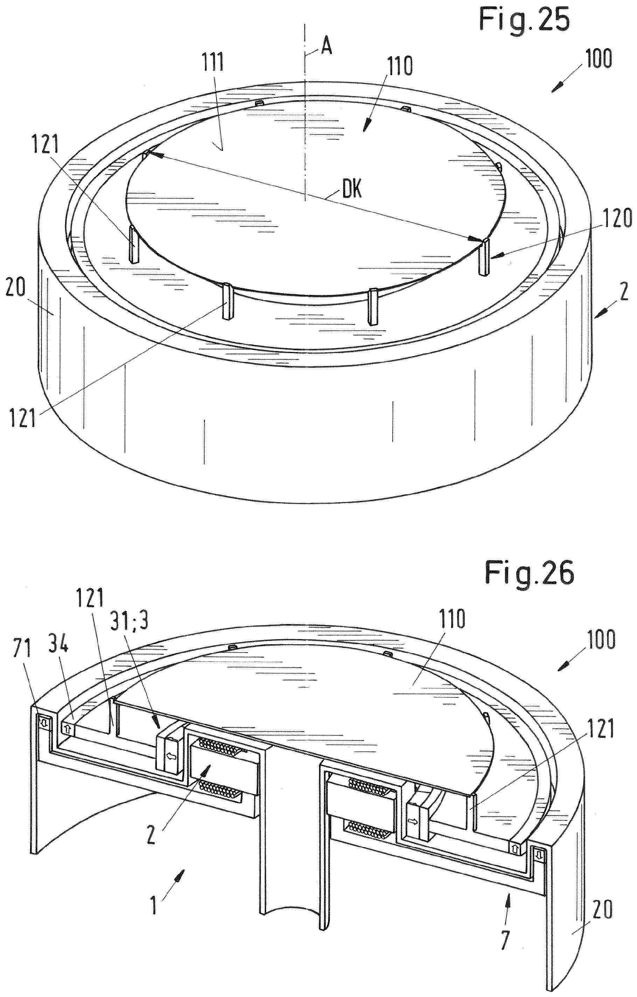

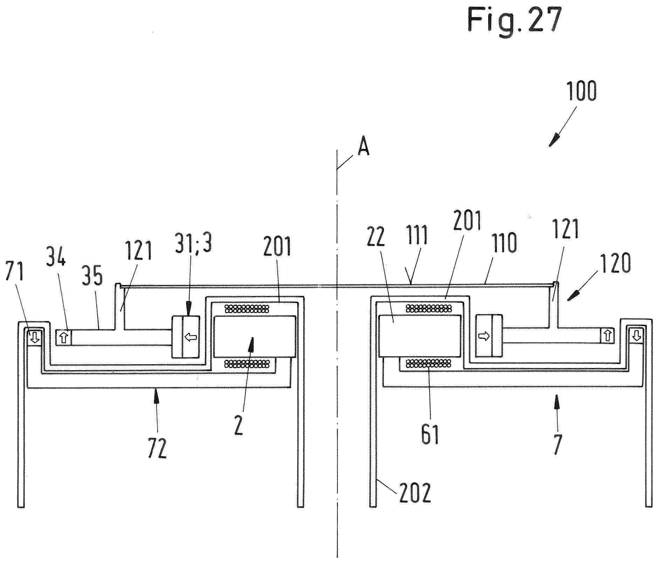

Fig. 25 zeigt in einer perspektivischen Darstellung eine Variante des in Fig. 22 - Fig. 24 dargestellten Ausführungsbeispiels einer erfindungsgemässen Rotationsvorrichtung 100 zur Behandlung der Oberfläche 111 des scheibenförmigen Körpers 110. Zum besseren Verständnis zeigt Fig. 26 noch eine perspektivische Schnittdarstellung dieser Variante in einem Schnitt in axialer Richtung A und Fig. 27 eine schematische Schnittdarstellung dieser Variante in einem Schnitt entlang der axialen Richtung A.

Die Variante der Rotationsvorrichtung 100 unterscheidet sich durch die Ausgestaltung der Halterung 120 für den Wafer 110. Die Variante ist für kleinere Wafer 110 ausgestaltet, deren Aussendurchmesser DK kleiner ist als der Innendurchmesser des Lagerrings 34. Die in Umfangsrichtung gesehen äquidistant auf dem Verbindungselement angeordneten Haltearme 121 sind hier jeweils als ein sich in axialer Richtung A erstreckender, stabförmiger Haltearm 121 ausgestaltet.

Es versteht sich, dass die erfindungsgemässe Rotationsvorrichtung 100 zur Behandlung der Oberfläche 111 des scheibenförmigen Körpers 110 auch mit einem elektromagnetischen Drehantrieb 1 ausgestaltet sein kann, welcher gemäss dem zweiten Ausführungsbeispiel (Fig. 7) ausgestaltet ist, bei welchem also der Statorring 71 bezüglich der axialen Richtung A beabstandet zum Lagerring 34, insbesondere unterhalb des Lagerrings 34 angeordnet ist.

Durch die Erfindung wird ferner eine Rotationsvorrichtung zum Fördern, Mischen oder Rühren von Fluiden vorgeschlagen, die dadurch gekennzeichnet ist, dass die Rotationsvorrichtung einen elektromagnetischen Drehantrieb 1 umfasst, der erfindungsgemäss ausgestaltet ist, wobei der Rotor 3 des Drehantriebs 1 als Rotor 3 der Rotationsvorrichtung ausgestaltet ist.

Fig. 28 zeigt in einer perspektivischen Darstellung ein Ausführungsbeispiel einer erfindungsgemässen Rotationsvorrichtung, welches als Mischvorrichtung ausgestaltet ist. Die Mischvorrichtung ist gesamthaft mit dem Bezugszeichen 200 bezeichnet. Zum besseren Verständnis zeigt Fig. 29 noch eine perspektivische Schnittdarstellung der Mischvorrichtung 200 in einem Schnitt in axialer Richtung A und Fig. 30 eine schematische Schnittdarstellung der Mischvorrichtung 200 in einem Schnitt entlang der axialen Richtung A.

Bei dem in den Fig. 28 - Fig. 30 dargestellten Ausführungsbeispiel umfasst die Mischvorrichtung 200 den elektromagnetischen Drehantrieb 1, der hier gemäss dem zweiten Ausführungsbeispiel (Fig. 7) ausgestaltet ist, bei welchem der Statorring 71 bezüglich der axialen Richtung A beabstandet zum Lagerring 34 angeordnet ist. Der Statorring 71 ist darstellungsgemäss (Fig. 29, Fig. 30) unterhalb des Lagerrings 34 angeordnet, derart, dass der Statorring 71 und der Lagerring 34 bezüglich der axialen Richtung A miteinander fluchten.

Der Rotor 3 umfasst eine Mehrzahl von Flügeln 210 zum Mischen oder Rühren von Fluiden. Bei dem hier beschriebenen Ausführungsbeispiel sind insgesamt vier Flügel 210 vorgesehen, wobei diese Anzahl beispielhaften Charakter hat. Alle Flügel 210 sind auf dem Verbindungselement 35 angeordnet und bezüglich der Umfangsrichtung des Rotors 3 äquidistant angeordnet. Jeder Flügel 210 erstreckt sich in radialer Richtung nach aussen und ist drehfest mit dem Verbindungselement 35 und damit auch drehfest mit dem Rotor 3 verbunden. Die Flügel 210 können separate Komponenten sein, die dann auf dem Verbindungselement 35 fixiert werden. Es ist natürlich auch möglich, dass alle Flügel 210 integraler Bestandteil des Verbindungselements 35 sind, dass also das Verbindungselement 35 mit allen Flügeln 210 einstückig ausgestaltet ist. Der Rotor 3 mit den Flügeln 210 bildet das Flügelrad bzw. das Laufrad der Mischvorrichtung 200, mit welchem auf das Fluid oder die Fluide eingewirkt wird.

Ein vorteilhafter Aspekt ist es, dass der Rotor 3 als Integralrotor ausgestaltet ist, weil er sowohl der Rotor 3 des elektromagnetischen Drehantriebs 1 ist, als auch der Rotor 3 der Mischvorrichtung 200, mit welchem Fluide gefördert, gemischt oder gerührt werden können. Insgesamt erfüllt der Rotor 3 somit drei Funktionen in einem: Er ist der Rotor des elektromagnetischen Antriebs, er ist der Rotor der magnetischen Lagerung, und er ist das Laufrad, mit welchem auf das Fluid bzw. die Fluide eingewirkt wird. Diese Ausgestaltung als Integralrotor bietet den Vorteil einer sehr kompakten und platzsparenden Ausgestaltung.

Die Mischvorrichtung 200 umfasst ferner einen Mischbehälter 220 mit einem formstabilen Boden 221. Von dem Mischbehälter 220 ist in den Fig. 28 und Fig. 29 nur der Boden 221 dargestellt. Der Mischbehälter 220 dient zur Aufnahme des Fluids oder der Fluide, welche gemischt oder gerührt werden sollen. Ausser dem formstabilen Boden 221 umfasst der Mischbehälter 220 mindestens eine weitere Wandung 223 (Fig. 30), welche den Mischbehälter 220 begrenzt. Diese Wandung 223 ist in Fig. 28 und Fig. 29 nicht dargestellt und in Fig. 30 angedeutet. Die Wandung 223 kann dabei als eine formstabile Wandung ausgestaltet sein, die beispielsweise aus einem Kunststoff besteht. Die Wandung 223 kann aber auch als eine flexible Wandung 223 ausgestaltet sein und vorzugsweise aus einem Kunststoff bestehen. Die flexible Wandung 223 bildet dann zusammen mit dem formstabilen Boden 221 den Mischbehälter 220 zur Aufnahme der zu mischenden oder zu rührenden Substanzen, wobei dieser Mischbehälter 220 dann als flexibler Beutel, beispielsweise als Plastik- oder Kunststoffsack, ausgestaltet ist, der zusammengefaltet werden kann, sodass er bei der Lagerung möglichst wenig Platz beansprucht. Diese Ausgestaltung des Mischbehälters 220 eignet sich insbesondere für Einmalanwendungen, bei welchen der Mischbehälter 220 mit dem darin angeordneten Rotor 3 bestimmungsgemäss nur einmal verwendet wird und für eine weitere Anwendung durch einen neuen Mischbehälter ersetzt wird.

Es versteht sich, dass die Mischvorrichtung 200 bzw. der Mischbehälter 220 auch für Mehrfachanwendungen, also für den Mehrfachgebrauch, ausgestaltet sein kann. Für Mehrfachanwendungen ist es bevorzugt, wenn der gesamte Mischbehälter 220 formstabil ausgestaltet ist. Vorzugsweise ist dann der Mischbehälter 220 aus einem Edelstahl, kann aber auch aus einem Kunststoff oder aus Glas oder aus einem anderen Material gefertigt sein.

Der formstabile Boden 221 des Mischbehälters 220 umfasst einen Spalttopf 222 zur Aufnahme des Stators 2 des Drehantriebs 1. Der Spalttopf 222 ist zentral im Boden 221 und innerhalb des ringförmigen magnetisch wirksamen Kerns 31 des Rotors 3 angeordnet, sodass der magnetisch wirksame Kern 31 des Rotors 3 im Betriebszustand den Spalttopf 222 umgibt. Dabei ist der Spalttopf 222 so bemessen, dass der magnetisch wirksame Kern 31 des Rotors 3 oder eine nicht dargestellte Ummantelung den Spalttopf 222 mit möglichst geringem Spiel umschliesst.

Wie dies insbesondere Fig. 29 und Fig. 30 zeigen, ist der formstabile Boden 221 mit dem Spalttopf 222 in der Mischvorrichtung 200 so ausgestaltet und angeordnet, dass der Spalttopf 222 zwischen den Statorpolen 21 des Stators 2 und dem magnetisch wirksamen Kern 31 des Rotors 3 angeordnet ist, und dass sich der formstabile Boden 221 in radialer Richtung zwischen dem magnetisch wirksamen Kern 31, dem Verbindungselement 35 und dem Lagerring 34 des Rotors 3 einerseits und dem Tragkörper 72 sowie dem Statorring 71 des zusätzlichen Lagerstators 7 andererseits erstreckt. Im zusammengesetzten Zustand sind somit der Stator 2 und der zusätzliche Lagerstator 7 ausserhalb des Mischbehälters 220 angeordnet, während der Rotor 3 mit den Flügeln 210 innerhalb des Mischbehälters 220 angeordnet ist.

Diese Ausgestaltung der Mischvorrichtung 200 eignet sich insbesondere auch für Ausführungsformen, die Komponenten für den Einmalgebrauch umfassen. Dabei hat die Mischvorrichtung vorzugsweise eine Einmalvorrichtung, die für den Einmalgebrauch ausgestaltet ist, sowie eine wiederverwendbare Vorrichtung, die für den Mehrfachgebrauch ausgestaltet ist,

Mit dem Begriff "Einmalvorrichtung" und anderen Zusammensetzungen mit dem Bestandteil "Einmal", sind dabei solche Komponenten bzw. Teile gemeint, die für den Einmalgebrauch ausgestaltet sind, die also bestimmungsgemäss nur ein einziges Mal benutzt werden können und dann entsorgt werden. Für eine neue Anwendung muss dann ein neues, bisher unbenutztes Einmalteil eingesetzt werden. Bei der Konzipierung bzw. der Ausgestaltung der Einmalvorrichtung ist es daher ein wesentlicher Aspekt, dass die Einmalvorrichtung in möglichst einfacher Weise mit der wiederverwendbaren Vorrichtung zu der Mischvorrichtung 200 zusammenfügbar ist. Die Einmalvorrichtung soll also in sehr einfacher Weise ersetzt werden können, ohne dass dafür ein hoher Montageaufwand notwendig ist. Besonders bevorzugt soll die Einmalvorrichtung ohne die Verwendung von Werkzeugen mit der wiederverwendbaren Vorrichtung zusammenfügbar und von dieser trennbar sein.

Bei der Mischvorrichtung 200 umfasst die Einmalvorrichtung den Mischbehälter 220 mit dem darin befindlichen Rotor 3, und die wiederverwendbare Vorrichtung umfasst den Stator 2 sowie den zusätzlichen Lagerstator 7.

Dabei ist es im Hinblick auf eine möglichst einfache Ausgestaltung und ein möglichst einfaches Zusammensetzen bzw. Trennen der Einmalvorrichtung und der wiederverwendbaren Vorrichtung vorteilhaft, dass der Drehantrieb 1 gemäss dem zweiten Ausführungsbeispiel (Fig. 7) ausgestaltet ist, bei welchem der Statorring 71 bezüglich der axialen Richtung A beabstandet zum Lagerring 34 angeordnet ist. Hierdurch kann der Mischbehälter 220 in sehr einfacher Weise mit dem Stator 2 und dem zusätzlichen Lagerstator 7 zusammengefügt bzw. von diesen getrennt werden. Zum Zusammenfügen ist es lediglich notwendig, den Spalttopf 222 über den Stator 2 zu stülpen und schon ist die Mischvorrichtung 200 bereit für die Anwendung. Nach der Anwendung kann der Mischbehälter 210 in einfacher Weise wieder vom Stator 2 und dem zusätzlichen Lagerstator 7 getrennt werden.

Es versteht sich, dass die Mischvorrichtung 200 auch gesamthaft als wiederverwendbare Vorrichtung, also für den Mehrfachgebrauch ausgestaltet sein kann. Bei einer solchen Ausgestaltung sind also insbesondere auch der Mischbehälter 220 mit dem darin angeordneten Rotor 3 für den Mehrfachgebrauch ausgestaltet.

Die als Mischvorrichtung 200 ausgestaltete Rotationsvorrichtung kann insbesondere in der pharmazeutischen Industrie und in der biotechnologischen Industrie Verwendung finden. Speziell eignet sich die Mischvorrichtung 200 für solche Anwendungen, bei denen ein sehr hohes Mass an Reinheit oder Sterilität derjenigen Komponenten wesentlich ist, die mit den zu mischenden Substanzen in Kontakt kommen. Die Mischvorrichtung 200 kann auch als Bioreaktor oder als Fermenter ausgestaltet sein. Es versteht sich jedoch, dass die Mischvorrichtung 200 nicht auf solche Ausgestaltungen beschränkt ist, sondern ganz allgemein als Mischvorrichtung 200 ausgestaltbar ist, mit der Medien oder Substanzen gemischt oder gerührt werden können. Insbesondere können diese Substanzen Fluide oder Feststoffe, vorzugsweise Pulver, sein. Die Mischvorrichtung 200 eignet sich zum Mischen von Flüssigkeiten untereinander und/oder zum Mischen von mindestens einer Flüssigkeit mit einem Pulver oder sonstigen Feststoff und/oder zum Mischen von Gasen mit Flüssigkeiten und/oder Feststoffen.

Es versteht sich, dass die erfindungsgemässe Rotationsvorrichtung 200 zum Fördern, Mischen oder Rühren von Fluiden auch mit einem elektromagnetischen Drehantrieb 1 ausgestaltet sein kann, welcher gemäss dem ersten Ausführungsbeispiel (Fig. 3) ausgestaltet ist, bei welchem also der Statorring 71 konzentrisch mit dem Lagerring 34 angeordnet ist, sodass der Statorring 71 den Lagerring 34 umschliesst.

## Patentansprüche

1. Elektromagnetischer Drehantrieb, der als Aussenläufer ausgestaltet ist, mit einem Rotor (3), der einen ringförmigen und permanentmagnetisch ausgestalteten magnetisch wirksamen Kern (31) umfasst, welcher um einen Stator (2) herum angeordnet ist, und welcher eine magnetische Mittelebene (C) hat, wobei der Stator (2) als Lager- und Antriebsstator ausgestaltet ist, mit welchem der Rotor (3) im Betriebszustand berührungslos magnetisch um eine Solldrehachse antreibbar ist, die eine axiale Richtung (A) definiert, und mit welchem der Rotor (3) berührungslos magnetisch bezüglich des Stators (2) lagerbar ist, wobei der Rotor (3) in einer zur axialen Richtung (A) senkrechten radialen Ebene aktiv magnetisch gelagert ist, und in axialer Richtung (A) sowie gegen Verkippungen passiv magnetisch stabilisiert ist, wobei der Stator (2) Spulen (61) umfasst, mit denen sich ein magnetisches Drehfeld erzeugen lässt, welches zum einen ein Drehmoment auf den magnetisch wirksamen Kern (31) des Rotors (3) ausübt, das dessen Rotation bewirkt, und welches zum anderen eine beliebig einstellbare Querkraft auf den magnetisch wirksamen Kern (31) des Rotors (3) ausübt, sodass dessen radiale Position -also seine Position in der radialen Ebene- aktiv steuerbar bzw. regelbar ist, wobei der Rotor (3) einen magnetisch wirksamen Lagerring (34) umfasst, der radial aussen liegend und beabstandet zu dem magnetisch wirksamen Kern (31) des Rotors (3) angeordnet ist, wobei ein zusätzlicher Lagerstator (7) mit einem magnetisch wirksamen Statorring (71) zum Zusammenwirken mit dem Lagerring (34) vorgesehen ist, wobei der zusätzliche Lagerstator (7) derart ausgestaltet und angeordnet ist, dass der Statorring (71) den Rotor (3) passiv magnetisch gegen Verkippungen stabilisiert, wobei der Lagerring (34) über ein Verbindungselement (35) aus einem niederpermeablen Material mit dem magnetisch wirksamen Kern (31) des Rotors (3) verbunden ist, wobei sowohl der Lagerring (34) des Rotors (3) als auch der Statorring (71) des zusätzlichen Lagerstators (7) jeweils mindestens einen Permanentmagneten (341, 711) umfassen, und wobei der zusätzliche Lagerstator (7) einen Tragkörper (72) zum Tragen des stationären Statorrings (71) umfasst.

2. Drehantrieb nach Anspruch 1, wobei der Lagerring (34) des Rotors (3) in der magnetischen Mittelebene (C) des magnetisch wirksamen Kerns (31) des Rotors (3) angeordnet ist.

3. Drehantrieb nach Anspruch 1, wobei der Lagerring (34) bezüglich der axialen Richtung (A) mit einem von Null verschiedenen Abstand (D) zu der magnetischen Mittelebene (C) des magnetisch wirksamen Kerns (31) des Rotors (3) angeordnet ist, und wobei gesagter Abstand (D) höchstens ein Viertel, vorzugsweise höchstens ein Fünftel des Innenradius (LR) des Lagerrings (34) beträgt.

4. Drehantrieb nach einem der vorangehenden Ansprüche, wobei der Statorring (71) des zusätzlichen Lagerstators (7) konzentrisch mit dem Lagerring (34) des Rotors (3) angeordnet ist, derart dass der Statorring (71) den Lagerring (34) radial aussen liegend umgibt.

5. Drehantrieb nach einem der Ansprüche 1-3, wobei der Statorring (71) des zusätzlichen Lagerstators (7) bezüglich der axialen Richtung (A) beabstandet zu dem Lagerring (34) des Rotors (3) angeordnet ist, und wobei der Statorring (71) vorzugsweise den gleichen Innenradius (SR) aufweist wie der Lagerring (34).

6. Drehantrieb nach einem der vorangehenden Ansprüche, wobei das Verbindungselement (35) scheibenförmig ausgestaltet ist und optional eine Mehrzahl von Ausnehmungen (351) aufweist.

7. Drehantrieb nach einem der Ansprüche 1-5 wobei das Verbindungselement (35) eine Mehrzahl von Speichen (352) umfasst, von denen sich jede in radialer Richtung zwischen dem magnetisch wirksamen Kern (31) des Rotors (3) und dem magnetisch wirksamen Lagerring (34) des Rotors (3) erstreckt.

8. Drehantrieb nach einem der vorangehenden Ansprüche, wobei der Statorring (71) und der Lagerring (34) jeweils aus einem permanentmagnetischen Material bestehen und jeweils segmentiert mit einer Mehrzahl von Permanentmagneten (341, 711) ausgestaltet sind.

9. Drehantrieb nach einem der vorangehenden Ansprüche, wobei der Statorring (71) und der Lagerring (34) jeweils in axialer Richtung (A) magnetisiert sind, und wobei die Magnetisierung des Statorrings (71) entgegengesetzt zur Magnetisierung des Lagerrings (34) gerichtet ist.

10. Drehantrieb nach einem der vorangehenden Ansprüche, wobei der Statorring (71) und der Lagerring (34) jeweils in radialer Richtung magnetisiert sind, wobei die Magnetisierung des Statorrings (71) und die Magnetisierung des Lagerrings (34) gleich gerichtet sind, und wobei vorzugsweise die Magnetisierung des Statorrings (71) und die Magnetisierung des Lagerrings (34) jeweils radial nach aussen gerichtet sind.

11. Drehantrieb nach einem der vorangehenden Ansprüche, wobei entweder der Statorring (71) in axialer Richtung (A) und der Lagerring (34) in radialer Richtung magnetisiert ist, oder der Statorring (71) in radialer Richtung und der Lagerring (34) in axialer Richtung (A) magnetisiert ist.

12. Rotationsvorrichtung zur Behandlung einer Oberfläche (111) eines scheibenförmigen Körpers (110), mit welcher der Körper (110) zur Behandlung rotierbar ist, **dadurch gekennzeichnet, dass** die Rotationsvorrichtung (100) einen elektromagnetischen Drehantrieb (1) umfasst, der gemäss einem der Ansprüche 1-11 ausgestaltet ist, wobei der Rotor (3) eine Halterung (120) für den scheibenförmigen Körper (110) umfasst.

13. Rotationsvorrichtung zum Fördern, Mischen oder Rühren von Fluiden, **dadurch gekennzeichnet, dass** die Rotationsvorrichtung (200) einen elektromagnetischen Drehantrieb (1) umfasst, der gemäss einem der Ansprüche 1-11 ausgestaltet ist, wobei der Rotor (3) des Drehantriebs (1) als Rotor (3) der Rotationsvorrichtung (200) ausgestaltet ist.

14. Rotationsvorrichtung nach Anspruch 13, wobei der Rotor (3) eine Mehrzahl von Flügeln (210) zum Mischen oder Rühren von Fluiden aufweist, wobei die Flügel (210) auf dem Verbindungselement (35) angeordnet sind.

## Claims

1. An electromagnetic rotary drive, which is designed as an external rotor, having a rotor (3) comprising a ring-shaped and permanent-magnetically designed magnetically effective core (31) being arranged around a stator (2) and having a magnetic central plane (C), wherein the stator (2) is designed as a bearing and a drive stator, with which, in the operating state, the rotor (3) is contactlessly magnetically drivable about a desired axis of rotation defining an axial direction (A), and with which the rotor (3) is contactlessly magnetically levitatable with respect to the stator (2), wherein the rotor (3) is actively magnetically levitated in a radial plane perpendicular to the axial direction (A), and is passively magnetically stabilized in axial direction (A) and against tilts, wherein the stator (2) comprises coils (61), by means of which a magnetic rotary field can be generated, which, on the one hand, exerts a torque on the magnetically effective core (31) of the rotor (3), causing it to rotate, and which, on the other hand, exerts an arbitrarily adjustable transverse force on the magnetically effective core (31) of the rotor (3), so that its radial position - i.e., its position in the radial plane - can be actively controlled or regulated, wherein the rotor (3) comprises a magnetically effective bearing ring (34), which is arranged radially externally disposed and spaced from the magnetically effective core (31) of the rotor (3), wherein an additional bearing stator (7) having a magnetically effective stator ring (71) is provided for interaction with the bearing ring (34), wherein the additional bearing stator (7) is designed and arranged in such a way that the stator ring (71) passively magnetically stabilizes the rotor (3) against tilts, wherein the bearing ring (34) is connected to the magnetically effective core (31) of the rotor (3) via a connecting element (35) made of a low-permeable material, wherein both the bearing ring (34) of the rotor (3) and the stator ring (71) of the additional bearing stator (7) each comprise at least one permanent magnet (341, 711), and wherein the additional bearing stator (7) comprises a supporting body (72) for supporting the stationary stator ring (71).

2. A rotary drive according to claim 1, wherein the bearing ring (34) of the rotor (3) is arranged in the magnetic central plane (C) of the magnetically effective core (31) of the rotor (3).

3. A rotary drive according to claim 1, wherein the bearing ring (34) is arranged with respect to the axial direction (A) at a distance (D) different from zero to the magnetic central plane (C) of the magnetically effective core (31) of the rotor (3), and wherein said distance (D) is at most one quarter, preferably at most one fifth, of the inner radius (LR) of the bearing ring (34).

4. A rotary drive according to anyone of the preceding claims, wherein the stator ring (71) of the additional bearing stator (7) is arranged concentrically with the bearing ring (34) of the rotor (3) such that the stator ring (71) surrounds the bearing ring (34) radially externally disposed.

5. A rotary drive according to anyone of the claims 1 to 3, wherein the stator ring (71) of the additional bearing stator (7) is arranged spaced from the bearing ring (34) of the rotor (3) with respect to the axial direction (A), and wherein the stator ring (71) preferably has the same inner radius (SR) as the bearing ring (34).

6. A rotary drive according to anyone of the preceding claims, wherein the connecting element (35) has a disk-shaped design and optionally has a plurality of recesses (351).

7. A rotary drive according to anyone of the claims 1 to 5, wherein the connecting element (35) comprises a plurality of spokes (352) each extending in radial direction between the magnetically effective core (31) of the rotor (3) and the magnetically effective bearing ring (34) of the rotor (3).

8. A rotary drive according to anyone of the preceding claims, wherein the stator ring (71) and the bearing ring (34) each consist of a permanent magnetic material and are each designed segmented with a plurality of permanent magnets (341, 711).

9. A rotary drive according to anyone of the preceding claims, wherein the stator ring (71) and the bearing ring (34) each are magnetized in axial direction (A), and the magnetization of the stator ring (71) being directed in the opposite direction to the magnetization of the bearing ring (34).

10. A rotary drive according to anyone of the preceding claims, wherein the stator ring (71) and the bearing ring (34) each are magnetized in radial direction, the magnetization of the stator ring (71) and the magnetization of the bearing ring (34) being directed in the same direction, and preferably the magnetization of the stator ring (71) and the magnetization of the bearing ring (34) each being directed radially outwards.

11. A rotary drive according to anyone of the preceding claims, wherein either the stator ring (71) is magnetized in axial direction (A) and the bearing ring (34) is magnetized in radial direction, or the stator ring (71) is magnetized in radial direction and the bearing ring (34) is magnetized in axial direction (A).

12. A rotational device for treating a surface (111) of a disk-shaped body (110) with which the body (110) is rotatable for treatment, **characterized in that** the rotational device (100) comprises an electromagnetic rotary drive (1) being designed according to anyone of the claims 1 to 11, wherein the rotor (3) comprises a holder (120) for the disk-shaped body (110).

13. A rotational device for conveying, mixing or stirring fluids, **characterized in that** the rotational device (200) comprises an electromagnetic rotary drive (1) being designed according to anyone of the claims 1 to 11, wherein the rotor (3) of the rotary drive (1) is designed as rotor (3) of the rotational device (200).

14. A rotational device according to claim 13, wherein the rotor (3) has a plurality of vanes (210) for mixing or stirring fluids, the vanes (210) being arranged on the connecting element (35).

## Revendications

1. Entraînement rotatif électromagnétique, qui est conçu comme un rotor extérieur, avec un rotor (3) comprenant un noyau magnétiquement actif (31) réalisé sous forme annulaire et magnétiquement permanent, qui est disposé autour d'un stator (2) et qui présente un plan central magnétique (C), dans lequel le stator (2) est conçu comme un stator de palier et un stator d'entraînement, avec lequel le rotor (3) peut être entraîné magnétiquement sans contact dans l'état de fonctionnement autour d'un axe de rotation souhaité définissant une direction axiale (A), et avec lequel le rotor (3) peut être lévité magnétiquement sans contact par rapport au stator (2), dans lequel le rotor (3) est lévité magnétiquement activement dans un plan radial perpendiculaire à la direction axiale (A) et est stabilisé magnétiquement passivement dans la direction axiale (A) et contre des basculements, dans lequel le stator (2) comprend des bobines (61), au moyen desquelles un champ de rotation magnétique peut être généré, qui d'une part exerce un couple de rotation sur le noyau magnétiquement actif (31) du rotor (3) en le faisant tourner, et qui d'autre part exerce une force transversale réglable de manière quelconque sur le noyau magnétiquement actif (31) du rotor (3), de sorte que sa position radiale - c'est-à-dire sa position dans le plan radial - puisse être commandée ou réglée activement, dans lequel le rotor (3) comprend une bague de palier magnétiquement active (34), qui est disposée radialement à l'extérieur et espacée du noyau magnétiquement actif (31) du rotor (3), dans lequel un stator de palier supplémentaire (7) avec une bague de stator magnétiquement active (71) est prévu pour la coopération avec la bague de palier (34), dans lequel le stator de palier supplémentaire (7) est conçu et disposé de telle sorte que la bague de stator (71) stabilise magnétiquement passivement le rotor (3) contre des basculements, dans lequel la bague de palier (34) est connectée au noyau magnétiquement actif (31) du rotor (3) par le biais d'un élément de connexion (35) constitué d'un matériau faiblement perméable, dans lequel à la fois la bague de palier (34) du rotor (3) et la bague de stator (71) du stator de palier supplémentaire (7) comprennent chacune au moins un aimant permanent (341, 711), et dans lequel le stator de palier supplémentaire (7) comprend un corps de support (72) pour supporter la bague de stator (71) stationnaire.

2. Entraînement rotatif selon la revendication 1, dans lequel la bague de palier (34) du rotor (3) est disposée dans le plan central magnétique (C) du noyau magnétiquement actif (31) du rotor (3).

3. Entraînement rotatif selon la revendication 1, dans lequel la bague de palier (34) est disposée par rapport à la direction axiale (A) à une distance (D) différente de zéro par rapport au plan central magnétique (C) du noyau magnétiquement actif (31) du rotor (3), et dans lequel ladite distance (D) vaut au maximum un quart, de préférence au maximum un cinquième, du rayon intérieur (LR) de la bague de palier (34).

4. Entraînement rotatif selon l'une quelconque des revendications précédentes, dans lequel la bague de stator (71) du stator de palier supplémentaire (7) est disposée concentriquement à la bague de palier (34) du rotor (3) de telle sorte que la bague de stator (71) entoure la bague de palier (34) disposée radialement à l'extérieur.

5. Entraînement rotatif selon l'une quelconque des revendications 1 à 3, dans lequel la bague de stator (71) du stator de palier supplémentaire (7) est disposée à distance de la bague de palier (34) du rotor (3) par rapport à la direction axiale (A), et dans lequel la bague de stator (71) a de préférence le même rayon intérieur (SR) que la bague de palier (34).

6. Entraînement rotatif selon l'une quelconque des revendications précédentes, dans lequel l'élément de liaison (35) a une conception en forme de disque et a facultativement une pluralité d'évidements (351).

7. Entraînement rotatif selon l'une quelconque des revendications 1 à 5, dans lequel l'élément de liaison (35) comprend une pluralité de rayons (352) s'étendant chacun dans la direction radiale entre le noyau magnétiquement actif (31) du rotor (3) et la bague de palier magnétiquement active (34) du rotor (3).

8. Entraînement rotatif selon l'une quelconque des revendications précédentes, dans lequel la bague de stator (71) et la bague de palier (34) sont chacune constituées d'un matériau magnétique permanent et sont chacune conçues segmentées avec une pluralité d'aimants permanents (341, 711).

9. Entraînement rotatif selon l'une quelconque des revendications précédentes, dans lequel la bague de stator (71) et la bague de palier (34) sont chacune magnétisées dans la direction axiale (A), et dans lequel la magnétisation de la bague de stator (71) est dirigée dans la direction opposée à la magnétisation de la bague de palier (34).

10. Entraînement rotatif selon l'une quelconque des revendications précédentes, dans lequel la bague de stator (71) et la bague de palier (34) sont chacune magnétisées dans la direction radiale, dans lequel la magnétisation de la bague de stator (71) et la magnétisation de la bague de palier (34) sont dirigées dans la même direction, et dans lequel de préférence la magnétisation de la bague de stator (71) et la magnétisation de la bague de palier (34) sont chacune dirigées radialement vers l'extérieur.

11. Entraînement rotatif selon l'une quelconque des revendications précédentes, dans lequel soit la bague de stator (71) est magnétisée dans la direction axiale (A) et la bague de palier (34) est magnétisée dans la direction radiale, soit la bague de stator (71) est magnétisée dans la direction radiale et la bague de palier (34) est magnétisée dans la direction axiale (A).

12. Dispositif rotatif pour traiter une surface (111) d'un corps en forme de disque (110) avec lequel le corps (110) peut tourner pour le traitement, **caractérisé en ce que** le dispositif rotatif (100) comprend un entraînement rotatif électromagnétique (1) qui est conçu selon l'une quelconque des revendications 1 à 11, dans lequel le rotor (3) comprend un support (120) pour le corps en forme de disque (110).

13. Dispositif rotatif pour transporter, mélanger ou agiter des fluides, **caractérisé en ce que** le dispositif rotatif (200) comprend un entraînement rotatif électromagnétique (1) qui est conçu selon l'une quelconque des revendications 1 à 11, dans lequel le rotor (3) de l'entraînement rotatif (1) est conçu en tant que rotor (3) du dispositif rotatif (200).

14. Dispositif rotatif selon la revendication 13, dans lequel le rotor (3) a une pluralité d'aubes (210) pour mélanger ou agiter des fluides, dans lequel les aubes (210) sont disposées sur l'élément de liaison (35).
